# EUROPEAN PATENT SPECIFICATION

(11) **EP 4 160 627 B1**
(45) Date of publication and mention of the grant of the patent: **06.09.2023**
(21) Application number: 21200631.6
(22) Date of filing: 04.10.2021
(51) Int. Cl.: H01F 7/06, H01F 7/16, H02K 33/12, H01F 7/08

(54) **RECIPROCATING ELECTRIC ACTUATOR**
HIN- UND HERGEHENDER ELEKTRISCHER AKTUATOR
ACTIONNEUR ÉLECTRIQUE ALTERNATIF

(43) Date of publication of application: 05.04.2023
(73) Proprietor: Siemens Aktiengesellschaft, 80333 München (DE)
(72) Inventor: Bartnick, Dominik, 77833 Ottersweier (DE); Cooper, Nils, 76461 Muggensturm (DE); Gnoss, Thomas, 76461 Muggensturm (DE); Plakinger, Toni, 76332 Bad Herrenalb / Neusatz (DE); Preiß, Thomas, 76461 Muggensturm (DE); Wetzel, Martin, 76437 Rastatt (DE); Wiegand, Armin, 77839 Lichtenau-Muckenschopf (DE)
(74) Representative: Siemens Patent Attorneys

(56) References cited:
- EP-A1- 3 839 308
- WO-A1-91/11846
- US-A- 3 201 670
- US-A- 3 931 554
- US-A- 4 810 985
- US-A1- 2016 163 441

## Description

### Background

The present disclosure relates to a valve assembly comprising a valve actuator such as a hydraulic valve actuator. More specifically, the present disclosure focuses on a reciprocating, linear, electric actuator for such valves.

Various technical solutions for valve actuators are known from the prior art. In this respect, it is a common issue that large spring forces are required for large valves in order for the valve to close tightly. For example, large spring forces can be required in the case of counter-pressure. In principle, the following solutions are known or on the market:
A generic valve assembly is known from DE102014204496A1. The patent application DE102014204496A1 was filed by Schaeffler Technologies GmbH & Co. KG on 12 March 2014. The application was published on 18 September 2014. DE102014204496A1 deals with a rotary valve assembly.

The rotary valve assembly is operative to set a flow cross-section by means of a rotary valve. To that end, the rotary valve assembly has a rotary valve and a housing. The housing provides an inlet and an outlet for cooling water. The assembly uses the rotary valve to open and close a fluid path between the inlet and the outlet. A reciprocating piston pump is employed to change a position of the rotary valve. A coil actuates the reciprocating piston pump.

Another solution harnesses two serially arranged safety shut-off valves which can only open and close the valve. A gas volume is changed by means of a motor-driven, preferably rotatable damper. The damper is run by means of a motor, for example, by means of a synchronous motor or by means of a stepper motor, at specific positions. Those positions are detected by means of position feedback. Feedback is provided by way of a potentiometer and/or by way of a Hall sensor. Feedback can also be provided by way of a photoelectric relay and/or by way of cam-operated switches. The damper angle corresponds to the respective flow rate of the gas.

A European patent EP3081821B1 was granted on 29 November 2017 to SIEMENS AG.

EP3081821B1 originates from a European patent application EP3081821A1 filed on 14 April 2015. EP3081821B1 deals with an actuator for a valve and with a valve assembly.

EP3081821B1 discloses a valve assembly having a mass flow sensor. The mass flow sensor records a signal indicative of a flow rate through a valve of the valve assembly. A controller receives the signal from the mass flow sensor and compares it to a set point. A control signal is produced as a function of a deviation of the signal from the set point.

According to yet another solution, the stroke of a valve is changed by way of a plunger, the plunger being magnetically driven. With the strength of the flow through the coils, the valve stroke and the flow rate of the gas vary. In the case of large valves, due to the large areas high spring forces can be necessary for the valve to close tightly without being controlled. Large currents and/or many copper wire windings are thus necessary to open or to hold the plunger in one position.

The hydraulic pumps in the prior art employ a coil and an armature having a permanent magnet. When the windings of the coil carry an electric current, the coil produces a magnetic flux. Due to the magnetic flux, the permanent magnet urges the armature from a first position to a second position. When the electric current stops, a spring connected to the armature returns the armature. The arrangement having a coil and a spring uses only one half-cycle out of two half-cycles of an alternating electric current. In a first half-cycle, the coil urges the armature from a first position to a second position. In a second half cycle, the electric current through the coil stops. The spring then returns the armature to its first position.

An arrangement having two coils is known from the patent US4507579A. The patent US4507579A was issued on 26 March 1985 and deals with a reciprocating piston electric motor. US4507579A discloses a pair of coils and a piston. The piston is moveably arranged inside a cylindrical housing. A first coil of the pair of coils is arranged at a first end of the cylindrical housing. A second coil is arranged at a second end of the cylindrical housing. A crank mechanism energises and de-energises the coils such that only one coil is energised at a time. While the first coil sitting at the first end is enabled and draws the piston toward the first end, the second coil is de-energised. Likewise, the first coil is de-energised while the second coil sitting at the second end is energised and draws the piston toward the first end.

The documents US3931554A, US2016/163441A1, US3201670A and WO91/11846A1 disclose a linear actuator assembly according to the preamble of claim 1.

The coils of a hydraulic pump can also be arranged such that like poles face each other. That is, the north poles of the coils face each other in a first half-cycle and the south poles face each other in a second, subsequent half-cycle. The coils thus jointly urge a piston toward a first or a second position. The present disclosure introduces a hydraulic valve having two coils, wherein a mechanical switching mechanism is not necessary. Also, the hydraulic valve of the present disclosure dispenses with a spring return mechanism.

### Summary

The present disclosure deals with a linear valve assembly. The assembly provides an armature for reciprocating movement. A pair of coils and/or a pair of solenoids causes the reciprocating movement of the armature.

A current source electrically connects to the pair of coils and/or to the pair of solenoids. The current source also electrically connects to a power source. The current source converts electric power received from the power source into electric power for the pair of solenoids. In so doing, the current source dispenses with mechanically actuated switches and/or with mechanically actuated rectifiers. Consequently, the current source lacks those members that are prone to mechanical wear and/or failure.

According to the invention, the pair of coils and/or the pair of solenoids is arranged inside the armature. The armature can, by way of non-limiting example, be a hollow cylinder enveloping the pair of coils and/or the pair of solenoids. The armature can, by way of non-limiting example, also be a tubular member enveloping the pair of coils and/or the pair of solenoids. In a sophisticated embodiment, the pair of coils and/or the pair of solenoids provides bearings. The pair of coils and/or the pair of solenoids then causes movement of the armature and limits the degrees of freedom of such movement.

It is also envisaged that the armature comprises a permanent magnet. The permanent magnet cooperates with the pair of coils and/or with the pair of solenoids to cause movement of the armature. No electric currents need to be induced in the armature for the armature to cooperate with the pair of coils and/or with the pair of solenoids. The armature also needs not carry eddy currents induced by the pair of coils.

Permanent magnets cause a magnetic flux that generally declines as a function of time. Any mechanical forces applied by the armature on an appliance such as hydraulic pump consequently decline, too. For these reasons, an embodiment can dispense with a permanent magnet. The armature can then resemble a rotor of a squirrel cage motor. That is, a pair of coils and/or solenoids cooperates with the armature by inducing an electric current in the armature.

The current source can comprise rectifiers such as semiconducting rectifiers. Each coil of the pair of coils and/or each solenoid of the pair of solenoids is connected in series with such a rectifier. That way, the current source can directly connect to a power source providing an alternating current. The current source then rectifies the alternating current and supplies rectified currents to each coil and/or to each solenoid.

For some applications, the electric currents through the coils and/or through the solenoids need to be limited. To that end, the rectifiers can be embodied as controlled rectifiers such as thyristors. A controller inside the current source sends enable signals to these thyristors. Ultimately, the mechanical forces applied by the armature can be controlled as a function of the enable signals sent by the controller.

It is also envisaged that the power source provides a direct current. The current source then comprises switches such as insulated-gate bipolar transistors. In addition to enable signals, a controller also sends disable signals to those switches. That is, the controller enables and disables electric currents through the coils and/or solenoids based on the signals it sends to the switches. This type of current source can, by way of non-limiting example, connect to a power source such as a power-over-ethernet installation. Buildings often provide such power-over-ethernet installations. That is, the assembly is suitable for being used in such buildings. The assembly leverages direct current networks of buildings.

### Brief description of the drawings

Various features will become apparent to those skilled in the art from the following detailed description of the disclosed non-limiting embodiments. The drawings that accompany the detailed description can be briefly described as follows:
FIG 1 schematically shows a linear actuator not part of the claimed invention having an armature, a first outer coil and a second outer coil, the first outer coil and the second outer coil enveloping the armature.
FIG 2 schematically shows a linear actuator not part of the claimed invention having an armature comprising a permanent magnet
FIG 3 schematically shows a linear actuator according to the invention having an armature, a first inner coil and a second inner coil, the first inner coil and the second inner coil being arranged inside the armature.
FIG 4 schematically shows details of a current source of the linear actuator assembly.
FIG 5 schematically shows details of a thyristor-controlled current source of the linear actuator assembly.
FIG 6 schematically shows details of a current source of the linear actuator assembly, the current source being controlled by insulated-gate bipolar transistors.

### Detailed description

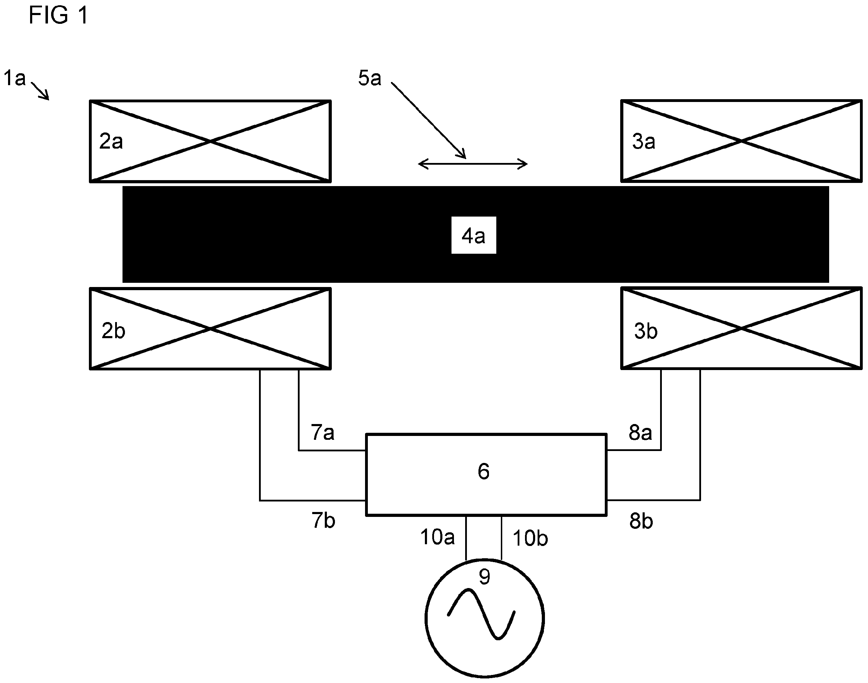

FIG 1 shows a linear actuator assembly 1a having a first outer coil 2a, 2b and a second outer coil 3a, 3b. The first outer coil 2a, 2b preferably comprises a first plurality of windings. The second outer coil 3a, 3b preferably also comprises a second plurality of windings. In an embodiment, the first outer coil 2a, 2b comprises a first outer solenoid. In a special embodiment, the first outer coil 2a, 2b is a first outer solenoid. In an embodiment, the second outer coil 3a, 3b comprises a second outer solenoid. In a special embodiment, the second outer coil 3a, 3b is a second outer solenoid.

In an embodiment, the first outer coil 2a, 2b is toroidal. In a related embodiment, the first outer coil 2a, 2b forms a toroid. In an embodiment, the second outer coil 3a, 3b is a hollow cylinder. In a related embodiment, the second outer coil 3a, 3b forms a hollow cylinder.

According to an aspect of the present disclosure, the first outer coil 2a, 2b is helical. According to an aspect of the present disclosure, the second outer coil 3a, 3b is helical.

The first outer coil 2a, 2b is advantageously different from the second outer coil 3a, 3b. The first plurality of windings is preferably different from the second plurality of windings. The first outer solenoid is ideally different from the second outer solenoid.

The linear actuator assembly 1a further comprises an armature 4a. The first outer coil 2a, 2b envelopes a first portion of the armature 4a. Preferably, the first plurality of windings of the first outer coil 2a, 2b envelopes the first portion of the armature 4a. The second outer coil 3a, 3b envelopes a second portion of the armature 4a. Preferably, the second plurality of windings of the second outer coil 3a, 3b envelopes the second portion of the armature 4a. The first portion of the armature 4a is advantageously different from the second portion of the armature 4a.

According to an aspect of the instant disclosure, the armature 4a is cylindrical in shape. A cylindrical armature 4a has a circular profile. The profile of the armature 4a can also be elliptical and/or triangular and/or quadratic and/or rectangular. These lists are not exhaustive.

The armature 4a preferably comprises an electrically conductive material such as steel, especially ferrite steel and/ or austenite steel. In a special embodiment, the armature 4a is made of an electrically conductive material such as steel, especially ferrite steel and/ or austenite steel. In an embodiment, the armature comprises an electrically conductive material such as copper and/or aluminum and/or an alloy thereof. In a special embodiment, the armature 4a is made of an electrically conductive material such as copper and/or aluminum and/or an alloy thereof.

According to an aspect of the present disclosure, the armature 4a comprises a plurality of electrically conductive bars. The plurality of electrically conductive bars has a first end and has a second end. The first end of the plurality of electrically conductive bars is advantageously different from the second end of the plurality of electrically conductive bars. A first electrically conductive portion can be arranged at the first end of the plurality of electrically conductive bars. The first electrically conductive portion electrically interconnects several or all the electrically conductive bars of the plurality of conductive bars. The first electrically conductive portion thus affords electric conductivity between several or between all the electrically conductive bars of the plurality of conductive bars. The first electrically conductive portion can comprise an electrically conductive material such as steel and/or copper and/or aluminum and/or an alloy thereof. The first electrically conductive portion can also be made of an electrically conductive material such as steel and/or copper and/or aluminum and/or an alloy thereof.

A second electrically conductive portion can be arranged at the second end of the plurality of electrically conductive bars. The second electrically conductive portion electrically interconnects several or all the electrically conductive bars of the plurality of conductive bars. The second electrically conductive portion thus affords electric conductivity between several or between all the electrically conductive bars of the plurality of conductive bars. The second electrically conductive portion can comprise an electrically conductive material such as steel and/or copper and/or aluminum and/or an alloy thereof. The second electrically conductive portion can also be made of an electrically conductive material such as steel and/or copper and/or aluminum and/or an alloy thereof. The second electrically conductive portion is preferably different from the first electrically conductive portion.

According to another aspect of the present disclosure, the armature 4a comprises a stack of electrically conductive sheets. The stack of electrically conductive sheets has a first end and has a second end. The first end of the stack of electrically conductive sheets is advantageously different from the second end of the stack of electrically conductive sheets. A first electrically conductive portion can be arranged at the first end of the stack of electrically conductive sheets. The first electrically conductive portion electrically interconnects several or all the electrically conductive sheets of the stack of electrically conductive sheets. The first electrically conductive portion thus affords electric conductivity between several or between all the electrically conductive sheets of the stack of electrically conductive sheets. The first electrically conductive portion can comprise an electrically conductive material such as steel and/or copper and/or aluminum and/or an alloy thereof. The first electrically conductive portion can also be made of an electrically conductive material such as steel and/or copper and/or aluminum and/or an alloy thereof.

A second electrically conductive portion can be arranged at the second end of the stack of electrically conductive sheets. The second electrically conductive portion electrically interconnects several or all the electrically conductive sheets of the stack of electrically conductive sheets. The second electrically conductive portion thus affords electric conductivity between several or between all the electrically conductive sheets of the stack of electrically conductive sheets. The second electrically conductive portion can comprise an electrically conductive material such as steel and/or copper and/or aluminum and/or an alloy thereof. The second electrically conductive portion can also be made of an electrically conductive material such as steel and/or copper and/or aluminum and/or an alloy thereof. The second electrically conductive portion is preferably different from the first electrically conductive portion.

A first double arrow 5a in FIG 1 indicates lateral, linear displacements of the armature 4a. That is, the armature 4a has a single degree of freedom. The armature 4a can move to the left or to the right. The armature 4a can also reciprocate in the directions indicated by the first double arrow 5a. The armature 4a can, however, not move up or down. The armature 4a cannot move or can substantially not move in any direction that is perpendicular to the first double arrow 5a.

In an embodiment, a ball bearing inhibits displacements of the armature 4a in directions other than the two opposite directions illustrated by the first double arrow 5a. In a special embodiment, a ball bearing prevents displacements of the armature 4a in directions other than the two opposite directions illustrated by the first double arrow 5a. In another embodiment, a pair of ball bearings inhibits displacements of the armature 4a. The pair of ball bearings inhibits displacements in directions other than the two opposite directions illustrated by the first double arrow 5a. In another special embodiment, a pair of ball bearings prevents displacements of the armature 4a. The pair of ball bearings prevents displacements in directions other than the two opposite directions illustrated by the first double arrow 5a. According to a special embodiment, the first outer coil 2a, 2b and the second outer coil 3a, 3b each comprise a ball bearing. The ball bearings of the coils 2a, 2b, 3a, 3c inhibit displacements of the armature 4a in directions other than the directions of first double arrow 5a. These ball bearings can even prevent displacements of the armature 4a in directions other than the directions of first double arrow 5a. It is also envisaged that more than two ball bearings restrain displacements of the armature 4a.

In an alternate embodiment, a friction bearing inhibits displacements of the armature 4a in directions other than the two opposite directions illustrated by the first double arrow 5a. In a special embodiment, a friction bearing prevents displacements of the armature 4a in directions other than the two opposite directions illustrated by the first double arrow 5a. In another embodiment, a pair of friction bearings inhibits displacements of the armature 4a. The pair of friction bearings inhibits displacements in directions other than the two opposite directions illustrated by the first double arrow 5a. In another special embodiment, a pair of friction bearings prevents displacements of the armature 4a. The pair of friction bearings prevents displacements in directions other than the two opposite directions illustrated by the first double arrow 5a. According to a special embodiment, the first outer coil 2a, 2b and the second outer coil 3a, 3b each comprise a friction bearing. The friction bearings of the coils 2a, 2b, 3a, 3c inhibit displacements of the armature 4a in directions other than the directions of first double arrow 5a. These friction bearings can even prevent displacements of the armature 4a in directions other than the directions of first double arrow 5a. It is also envisaged that more than two friction bearings restrain displacements of the armature 4a.

A current source 6 electrically connects to the first outer coil 2a, 2b. To that end, a first pair of electric wires 7a, 7b runs from the current source 6 to the first outer coil 2a, 2b. The first pair of electric wires 7a, 7b electrically and mechanically connects to the current source 6. The first pair of electric wires 7a, 7b electrically and mechanically connects to the first outer coil 2a, 2b. That is, the current source 6 supplies the first outer coil 2a, 2b with an electric current via a first pair of wires 7a, 7b.

The current source 6 electrically connects to the second outer coil 3a, 3b. To that end, a second pair of electric wires 8a, 8b runs from the current source 6 to the second outer coil 3a, 3b. The second pair of electric wires 8a, 8b electrically and mechanically connects to the current source 6. The second pair of electric wires 8a, 8b electrically and mechanically connects to the second outer coil 3a, 3b. That is, the current source 6 supplies the second outer coil 3a, 3b with an electric current via a second pair of wires 8a, 8b.

The current source 6 also electrically connects to a power source 9. The power source 9 preferably is an electric power source. The power source 9 can, by way of non-limiting examples, provide electric power in the form of an alternating current. It is envisaged that the alternating current has a frequency of 50 Hertz or of 60 Hertz or of 400 Hertz. The power source 9 preferably provides electric power having a voltage such as 220 Volts or 240 Volts or 110 Volts.

In another embodiment, the power source 9 provides electric power in the form of a direct current. The power source 9 can, by way of non-limiting example, provide a voltage in the range from 44.0 Volts to 57.0 Volts and/or in the range from 50.0 Volts to 57.0 Volts and/or in the range from 52.0 Volts to 57.0 Volts. According to an aspect of the present disclosure, the power source 9 is part of a power-over-ethernet installation. The power-over-ethernet installation can, by way of non-limiting examples, comply with any one of the standards:
- IEEE 802.3af-2003 of June 2003 and/or
- IEEE 802.3at-2009 of September 2009 and/or
- IEEE 802.3-2012 of December 2012.

A third pair of electric wires 10a, 10b runs from the power source 9 to the current source 6. The third pair of electric wires 10a, 10b electrically and mechanically connects to the power source 9. The third pair of electric wires 10a, 10b electrically and mechanically connects to the current source 6. That is, the power source 9 provides the current source 6 with power such as electric power via a third pair of wires 10a, 10b.

The first outer coil 2a, 2b as shown in FIG 1 is separate from the second outer coil 3a, 3b. It is also envisaged that the first outer coil 2a, 2b and the second outer coil 3a, 3b form a single coil having three or four taps. The wires 7a, 7b, 8a, 8b then connect to the taps of the single coil. Likewise, the first outer solenoid 2a, 2b as shown in FIG 1 is separate from the second outer solenoid 3a, 3b. It is also envisaged that the first outer solenoid 2a, 2b and the solenoid coil 3a, 3b form a single solenoid having three or four taps. The wires 7a, 7b, 8a, 8b then connect to the taps of the single solenoid.

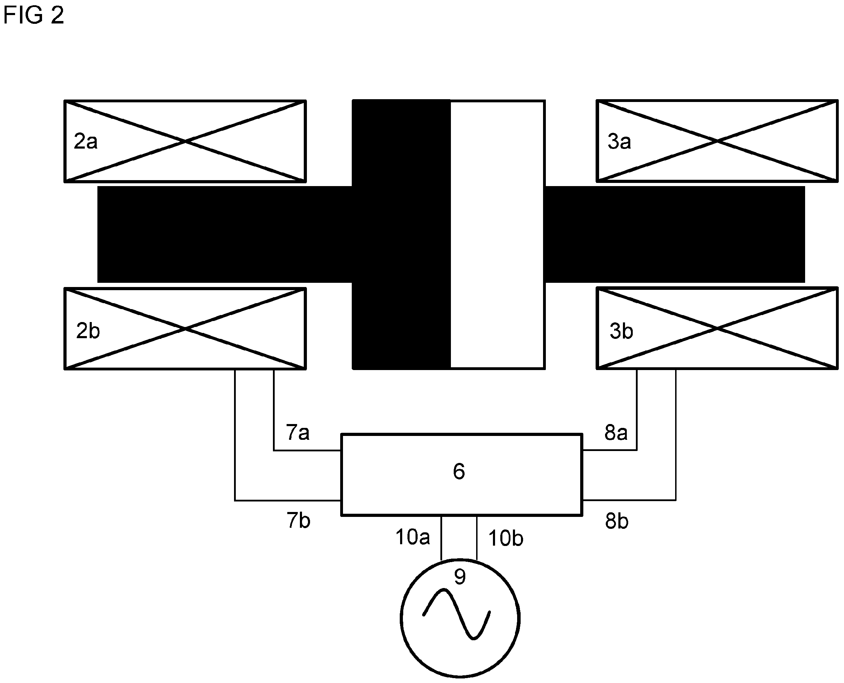

FIG 2 illustrates an armature comprising a permanent magnet. The permanent magnet advantageously comprises a ferromagnet. The permanent magnet ideally is a ferromagnet. It is envisaged that the permanent magnet comprises a neodymium magnet. In a specific embodiment, the neodymium magnet comprises a NdFeB magnet selected from at least one of a
sintered Nd2Fe14B magnet, or a
bonded Nd2Fe14B magnet.

In an alternate embodiment, the permanent magnet comprises a samarium-cobalt SmCo magnet selected from at least one of a
sintered SmCo5 magnet, or a
sintered Sm(Co, Fe, Cu, Zr)7 magnet.

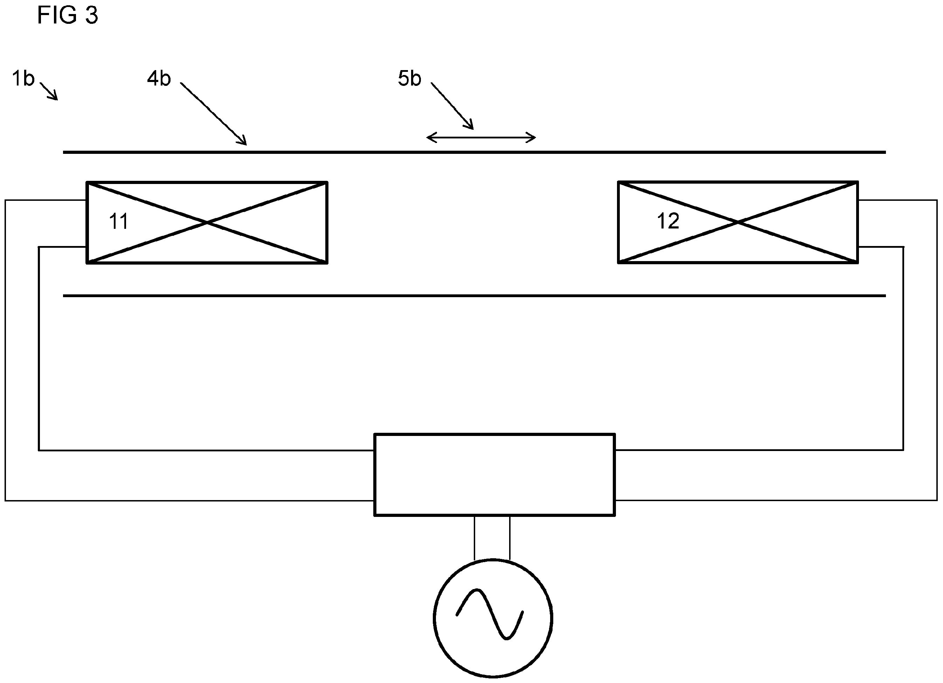

FIG 3 shows another linear actuator assembly 1b according to the invention. The linear actuator assembly 1b has a hollow armature 4b. The hollow armature 4b can, by way of non-limiting example, be a hollow cylinder. The hollow armature 4b can, by way of another non-limiting example, be tubular.

The hollow armature 4b preferably comprises an electrically conductive material such as steel, especially ferrite steel and/ or austenite steel. In a special embodiment, the hollow armature 4b is made of an electrically conductive material such as steel, especially ferrite steel and/ or austenite steel. In an embodiment, the armature comprises an electrically conductive material such as copper and/or aluminum and/or an alloy thereof. In a special embodiment, the hollow armature 4b is made of an electrically conductive material such as copper and/or aluminum and/or an alloy thereof.

According to an aspect of the present disclosure, the hollow armature 4b comprises a plurality of electrically conductive bars. The plurality of electrically conductive bars has a first end and has a second end. The first end of the plurality of electrically conductive bars is advantageously different from the second end of the plurality of electrically conductive bars. A first electrically conductive portion can be arranged at the first end of the plurality of electrically conductive bars. The first electrically conductive portion electrically interconnects several or all the electrically conductive bars of the plurality of conductive bars. The first electrically conductive portion thus affords electric conductivity between several or between all the electrically conductive bars of the plurality of conductive bars. The first electrically conductive portion can comprise an electrically conductive material such as steel and/or copper and/or aluminum and/or an alloy thereof. The first electrically conductive portion can also be made of an electrically conductive material such as steel and/or copper and/or aluminum and/or an alloy thereof.

A second electrically conductive portion can be arranged at the second end of the plurality of electrically conductive bars. The second electrically conductive portion electrically interconnects several or all the electrically conductive bars of the plurality of conductive bars of the hollow armature 4b. The second electrically conductive portion thus affords electric conductivity between several or between all the electrically conductive bars of the plurality of conductive bars. The second electrically conductive portion can comprise an electrically conductive material such as steel and/or copper and/or aluminum and/or an alloy thereof. The second electrically conductive portion can also be made of an electrically conductive material such as steel and/or copper and/or aluminum and/or an alloy thereof. The second electrically conductive portion of the hollow armature 4b is preferably different from the first electrically conductive portion of the hollow armature 4b.

A second double arrow 5b in FIG 3 indicates lateral, linear displacements of the hollow armature 4b. That is, the hollow armature 4b has a single degree of freedom. The hollow armature 4b can move to the left or to the right. The hollow armature 4b can also reciprocate in the directions indicated by the second double arrow 5b. The hollow armature 4b can, however, not move up or down. The hollow armature 4b cannot move or can substantially not move in any direction that is perpendicular to the second double arrow 5b.

A first inner coil 11 is arranged inside the hollow armature 4b. A second inner coil 12 is also arranged inside the hollow armature 4b. The first inner coil 11 preferably comprises a third plurality of windings. The second inner coil 12 preferably also comprises a fourth plurality of windings. In an embodiment, the first inner coil 11 comprises a first inner solenoid. In a special embodiment, the first inner coil 11 is a first inner solenoid. In an embodiment, the second inner coil 12 comprises a second inner solenoid. In a special embodiment, the second inner coil 12 is a second inner solenoid.

In an embodiment, the first inner coil 11 is helical. In an alternate embodiment, the first inner coil 11 is cylindrical. In an embodiment, the second inner coil 12 is helical. In an alternate embodiment, the second inner coil 12 is cylindrical.

The first inner coil 11 is advantageously different from the second inner coil 12. The third plurality of windings is preferably different from the fourth plurality of windings. The first inner solenoid is ideally different from the second inner solenoid.

In an embodiment, a ball bearing inhibits displacements of the hollow armature 4b in directions other than the two opposite directions illustrated by the second double arrow 5b. In a special embodiment, a ball bearing prevents displacements of the hollow armature 4b in directions other than the two opposite directions illustrated by the second double arrow 5b. In another embodiment, a pair of ball bearings inhibits displacements of the hollow armature 4b in directions other than the two opposite directions illustrated by the second double arrow 5b. In another special embodiment, a pair of ball bearings prevents displacements of the hollow armature 4b. The pair of ball bearings prevents displacements in directions other than the two opposite directions illustrated by the second double arrow 5b. According to a special embodiment, the first inner coil 11 and the second inner coil 12 each comprise a ball bearing. The ball bearings of the coils 11, 12 inhibit displacements of the hollow armature 4b in directions other than the directions of second double arrow 5b. These ball bearings can even prevent displacements of the hollow armature 4b in directions other than the directions of second double arrow 5b. It is also envisaged that more than two ball bearings restrain displacements of the hollow armature 4b.

In an alternate embodiment, a friction bearing inhibits displacements of the hollow armature 4b in directions other than the two opposite directions illustrated by the second double arrow 5b. In a special embodiment, a friction bearing prevents displacements of the hollow armature 4b in directions other than the two opposite directions illustrated by the second double arrow 5b. In another embodiment, a pair of friction bearings inhibits displacements of the hollow armature 4b in directions other than the two opposite directions illustrated by the second double arrow 5b. In another special embodiment, a pair of friction bearings prevents displacements of the hollow armature 4b. The pair of friction bearings prevents displacements in directions other than the two opposite directions illustrated by the second double arrow 5b. According to a special embodiment, the first inner coil 11 and the second inner coil 12 each comprise a friction bearing. The friction bearings of the coils 11, 12 inhibit displacements of the hollow armature 4b in directions other than the directions of second double arrow 5b. These friction bearings can even prevent displacements of the hollow armature 4b in directions other than the directions of second double arrow 5b. It is also envisaged that more than two friction bearings restrain displacements of the hollow armature 4b.

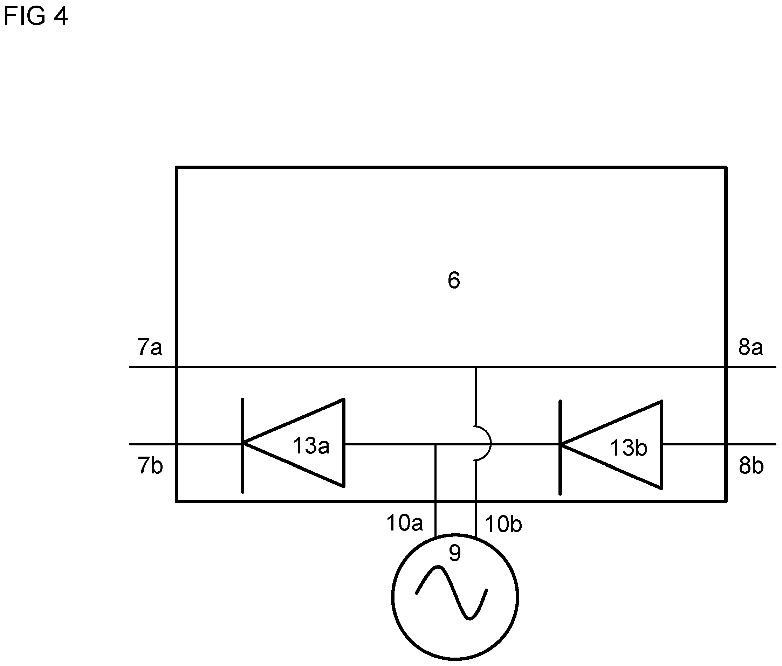

Now turning to FIG 4, a current source 6 for a linear actuator assembly 1a; 1b is illustrated. In an embodiment, the current source 6 is a current source of a linear actuator assembly 1.

The current source 6 provides a first pair of electric wires 7a, 7b to connect the current source 6 to the first outer coil 2a, 2b. The first pair of electric wires 7a, 7b provides a first wire 7a and a second wire 7b. The first pair of electric wires 7a, 7b electrically and mechanically connects to the current source 6. That is, the current source 6 is operative to supply the first outer coil 2a, 2b with an electric current via a first pair of wires 7a, 7b.

The current source 6 provides a second pair of electric wires 8a, 8b to connect the current source 6 to the second outer coil 3a, 3b. The second pair of electric wires 8a, 8b provides a first wire 8a and a second wire 8b. The second pair of electric wires 8a, 8b electrically and mechanically connects to the current source 6. That is, the current source 6 is operative to supply the second outer coil 3a, 3b with an electric current via a second pair of wires 8a, 8b. The second pair of electric wires 8a, 8b of the current source 6 is different from the first pair of electric wires 7a, 7b of the current source 6.

The current source 6 shown in FIG 4 electrically connects to a power source 9. The power source 9 preferably is an electric power source. The power source 9 can, by way of non-limiting examples, provide electric power in the form of an alternating current. It is envisaged that the alternating current has a frequency of 50 Hertz or of 60 Hertz or of 400 Hertz. The power source 9 preferably provides electric power having a voltage such as 220 Volts or 240 Volts or 110 Volts.

A third pair of electric wires 10a, 10b runs from the power source 9 to the current source 6. The third pair of electric wires 10a, 10b electrically and mechanically connects to the power source 9. The third pair of electric wires 10a, 10b electrically and mechanically connects to the current source 6. That is, the power source 9 provides the current source 6 with power such as electric power via a third pair of wires 10a, 10b. The third pair of electric wires 10a, 10b of the current source 6 is different from the first pair of electric wires 7a, 7b of the current source 6. The third pair of electric wires 10a, 10b of the current source 6 is different from the second pair of electric wires 8a, 8b of the current source 6.

A first rectifier 13a is disposed between the first electric wire 10a of the third pair of electric wires 10a, 10b and a second electric wire 7b. The second electric wire 7a belongs to the first pair of electric wires 7a, 7b. The first rectifier 13a electrically connects to the first electric wire 10a of the third pair of electric wires 10a, 10b. The first rectifier 13a also electrically connects to the second electric wire 7b of the first pair of electric wires 7a, 7b.

The first rectifier 13a is operable to conduct electric currents in one direction only. An electric current through the first rectifier 13a originates from the first electric wire 10a of the third pair of electric wires 10a, 10b. An electric current through the first rectifier 13a flows toward the second electric wire 7b of the first pair of electric wires 7a, 7b. The electric current can then flow from the second electric wire 7b of the first pair of electric wires 7a, 7b toward the first outer coil 2a, 2b. The electric current can also flow from the second electric wire 7b of the first pair of electric wires 7a, 7b toward the first inner coil 11. The first electric wire 10a of the third pair of electric wires 10a, 10b is different from the second electric wire 7b of the first pair of electric wires 7a, 7b.

According to an aspect of the present disclosure, the first rectifier 13a comprises a first diode. The first diode can comprise a semiconducting, p-n junction diode. The semiconducting, p-n junction diode can, by way of non-limiting example, be a silicon diode and/or a germanium diode and/or a gallium arsenide diode. The semiconducting, p-n junction diode, can, by way of another non-limiting example, also be a zinc oxide diode. In a special embodiment, first diode is a semiconducting, p-n junction diode. The semiconducting, p-n junction diode can, by way of non-limiting example, be a silicon diode and/or a germanium diode and/or a gallium arsenide diode. The semiconducting, p-n junction diode, can, by way of another non-limiting example, also be a zinc oxide diode. The first diode preferably has an anode end and a cathode end. The anode end of the first diode advantageously electrically connects to the first electric wire 10a of the third pair of electric wires 10a, 10b. The cathode end of the first diode advantageously electrically connects to the second electric wire 7b of the first pair of electric wires 7a, 7b.

According to a related aspect of the present disclosure, the first rectifier 13a comprises a first plurality of diodes. The first plurality of diodes can comprise a plurality of semiconducting, p-n junction diodes. The semiconducting, p-n junction diodes can, by way of non-limiting examples, be silicon diodes and/or germanium diodes and/or gallium arsenide diodes and/or zinc oxide diodes. The first plurality of diodes preferably has an anode end and a cathode end. The anode end of the first plurality of diodes connects to the first electric wire 10a of the third pair of electric wires 10a, 10b. The connection of the anode end preferably is an electric connection. The cathode end of the first plurality of diodes connects to the second electric wire 7b of the first pair of electric wires 7a, 7b. The connection of the cathode end preferably is an electric connection.

A second rectifier 13b is disposed between the first electric wire 10a of the third pair of electric wires 10a, 10b and the second electric wire 8b. The second electric wire 8b belongs to the second pair of electric wires 8a, 8b. The second rectifier 13b electrically connects to the first electric wire 10a of the third pair of electric wires 10a, 10b. The second rectifier 13b also electrically connects to the second electric wire 8b of the second pair of electric wires 8a, 8b.

The second rectifier 13b is operable to conduct electric currents in one direction only. An electric current through the second rectifier 13b flows toward the first electric wire 10a of the third pair of electric wires 10a, 10b. An electric current through the second rectifier 13b originates from the second electric wire 8b of the second pair of electric wires 8a, 8b. The electric current can thus flow from the second outer coil 3a, 3b toward the second electric wire 8b of the second pair of electric wires 8a, 8b. The electric current can thus flow from the second inner coil 12 toward the second electric wire 8b of the second pair of electric wires 8a, 8b. The first electric wire 10a of the third pair of electric wires 10a, 10b is different from the second electric wire 8b of the second pair of electric wires 8a, 8b.

According to an aspect of the present disclosure, the second rectifier 13b comprises a second diode. The second diode can comprise a semiconducting, p-n junction diode. The semiconducting, p-n junction diode can, by way of non-limiting example, be a silicon diode and/or a germanium diode and/or a gallium arsenide diode. The semiconducting, p-n junction diode, can, by way of another non-limiting example, also be a zinc oxide diode. In a special embodiment, second diode is a semiconducting, p-n junction diode. The semiconducting, p-n junction diode can, by way of non-limiting example, be a silicon diode and/or a germanium diode and/or a gallium arsenide diode. The semiconducting, p-n junction diode, can, by way of another non-limiting example, also be a zinc oxide diode. The second diode preferably has an anode end and a cathode end. The cathode end of the second diode advantageously electrically connects to the first electric wire 10a of the third pair of electric wires 10a, 10b. The anode end of the second diode advantageously electrically connects to the second electric wire 8b of the second pair of electric wires 8a, 8b.

According to a related aspect of the present disclosure, the second rectifier 13b comprises a second plurality of diodes. The second plurality of diodes can comprise a plurality of semiconducting, p-n junction diodes. The semiconducting, p-n junction diodes can, by way of non-limiting examples, be silicon diodes and/or germanium diodes and/or gallium arsenide diodes and/or zinc oxide diodes. The second plurality of diodes preferably has an anode end and a cathode end. The cathode end of the second plurality of diodes connects to the first electric wire 10a of the third pair of electric wires 10a, 10b. The connection of the cathode end preferably is an electric connection. The anode end of the second plurality of diodes connects to the second electric wire 8b of the second pair of electric wires 8a, 8b. The connection of the anode end preferably is an electric connection.

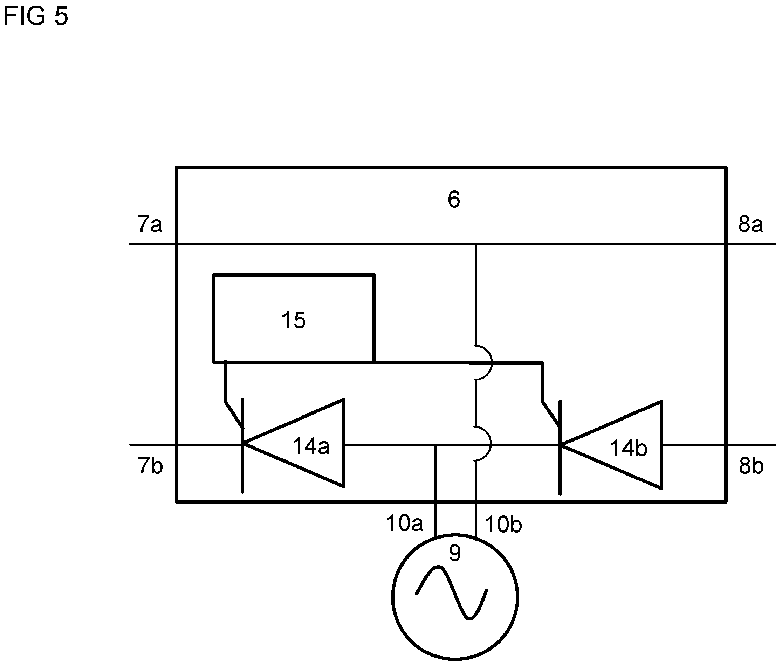

Now referring to FIG 5, a current source 6 can also comprise thyristors. That is, the current source 6 comprises a third controlled rectifier 14a and a fourth controlled rectifier 14b.

A third controlled rectifier 14a is disposed between the first electric wire 10a of the third pair of electric wires 10a, 10b and a second electric wire 7b. The second electric wire 7b belongs to the first pair of electric wires 7a, 7b. The third controlled rectifier 14a electrically connects to the first electric wire 10a of the third pair of electric wires 10a, 10b. The third controlled rectifier 14a also electrically connects to the second electric wire 7b of the first pair of electric wires 7a, 7b.

The third controlled rectifier 14a is operable to conduct electric currents in one direction only. An electric current through the third controlled rectifier 14a originates from the first electric wire 10a of the third pair of electric wires 10a, 10b. An electric current through the third controlled rectifier 14a flows toward the second electric wire 7b of the first pair of electric wires 7a, 7b. The electric current can then flow from the second electric wire 7b of the first pair of electric wires 7a, 7b toward the first outer coil 2a, 2b. The electric current can also flow from the second electric wire 7b of the first pair of electric wires 7a, 7b toward the first inner coil 11.

According to an aspect of the present disclosure, the third controlled rectifier 14a comprises a first thyristor. The first thyristor preferably has an anode end and a cathode end. The anode end of the first thyristor advantageously electrically connects to the first electric wire 10a of the third pair of electric wires 10a, 10b. The cathode end of the first thyristor advantageously electrically connects to the second electric wire 7b of the first pair of electric wires 7a, 7b.

According to a related aspect of the present disclosure, the third controlled rectifier 14a comprises a first plurality of thyristors. The first plurality of thyristors preferably has an anode end and a cathode end. The anode end of the first plurality of thyristors connects to the first electric wire 10a of the third pair of electric wires 10a, 10b. The connection of the anode end preferably is an electric connection. The cathode end of the first plurality of thyristors connects to the second electric wire 7b of the first pair of electric wires 7a, 7b. The connection of the cathode end preferably is an electric connection.

The third controlled rectifier 14a can be controlled via a gate terminal. The gate terminal preferably electrically connects to a gate electrode of the first thyristor. Advantageously, the gate terminal also mechanically connects to the gate electrode of the first thyristor. The gate terminal also connects to a controller 15. In an embodiment, the controller 15 comprises a microcontroller and/or a microprocessor. In a special embodiment, the controller 15 is a microcontroller and/or a microprocessor.

In a special embodiment, the controller 15 comprises a digital-to-analog converter. The digital-to-analog converter provides conversion of digital signals from the controller 15 into analog signals. The analog signal can, by way of non-limiting example, be employed to control a gate electrode of a controlled rectifier 14a, 14b. The digital-to-analog converter can be an integral part of the controller 15. That is, the digital-to-analog converter and the controller 15 are arranged on the same system-on-a-chip. More specifically, the digital-to-analog converter and the microcontroller are arranged on the same system-on-a-chip. It is also envisaged that the digital-to-analog converter and the microprocessor are arranged on the same system-on-a-chip.

In other words, the third controlled rectifier 14a is switched by the controller 15. Once the third controlled rectifier 14a is switched into an on-state, the third controlled rectifier 14a remains latched in the on-state. The third controlled rectifier 14a remains latched in the on-state until the current through the third controlled rectifier 14a drops to zero or to substantially zero. More specifically, the first thyristor of the third controlled rectifier 14a is switched by the controller 15. It is also envisaged that a first plurality of thyristors is switched by the controller 15.

The fourth controlled rectifier 14b is disposed between the first electric wire 10a of the third pair of electric wires 10a, 10b and the second electric wire 8b. The second electric wire 8b belongs to the second pair of electric wires 8a, 8b. The fourth controlled rectifier 14b electrically connects to the first electric wire 10a of the third pair of electric wires 10a, 10b. The fourth controlled rectifier 14b also electrically connects to the second electric wire 8b of the second pair of electric wires 8a, 8b.

The fourth controlled rectifier 14b is operable to conduct electric currents in one direction only. An electric current through the fourth controlled rectifier 14b flows toward the first electric wire 10a of the third pair of electric wires 10a, 10b. An electric current through the fourth controlled rectifier 14b originates from the second electric wire 8b of the second pair of electric wires 8a, 8b. The electric current can thus flow from the second outer coil 3a, 3b toward the second electric wire 8b of the second pair of electric wires 8a, 8b. The electric current can thus flow from the second inner coil 12 toward the second electric wire 8b of the second pair of electric wires 8a, 8b.

According to an aspect of the present disclosure, the fourth controlled rectifier 14b comprises a second thyristor. The second thyristor preferably has an anode end and a cathode end. The cathode end of the second thyristor advantageously electrically connects to the first electric wire 10a of the third pair of electric wires 10a, 10b. The anode end of the second thyristor advantageously electrically connects to the second electric wire 8b of the second pair of electric wires 8a, 8b.

According to a related aspect of the present disclosure, the fourth controlled rectifier 14b comprises a second plurality of thyristors. The second plurality of thyristors preferably has an anode end and a cathode end. The cathode end of the second plurality of thyristors connects to the first electric wire 10a of the third pair of electric wires 10a, 10b. The connection of the cathode end preferably is an electric connection. The anode end of the second plurality of thyristors connects to the second electric wire 8b of the second pair of electric wires 8a, 8b. The connection of the anode end preferably is an electric connection.

The fourth controlled rectifier 14b can be controlled via a gate terminal. The gate terminal preferably electrically connects to a gate electrode of the second thyristor. Advantageously, the gate terminal also mechanically connects to the gate electrode of the second thyristor. The gate terminal also connects to the controller 15.

In other words, the fourth controlled rectifier 14b is switched by the controller 15. Once the fourth controlled rectifier 14b is switched into an on-state, the fourth controlled rectifier 14b remains latched in the on-state. The fourth controlled rectifier 14b remains latched in the on-state until the current through the fourth controlled rectifier 14b drops to zero or to substantially zero. More specifically, the second thyristor of the fourth controlled rectifier 14b is switched by the controller 15. It is also envisaged that a second plurality of thyristors is switched by the controller 15.

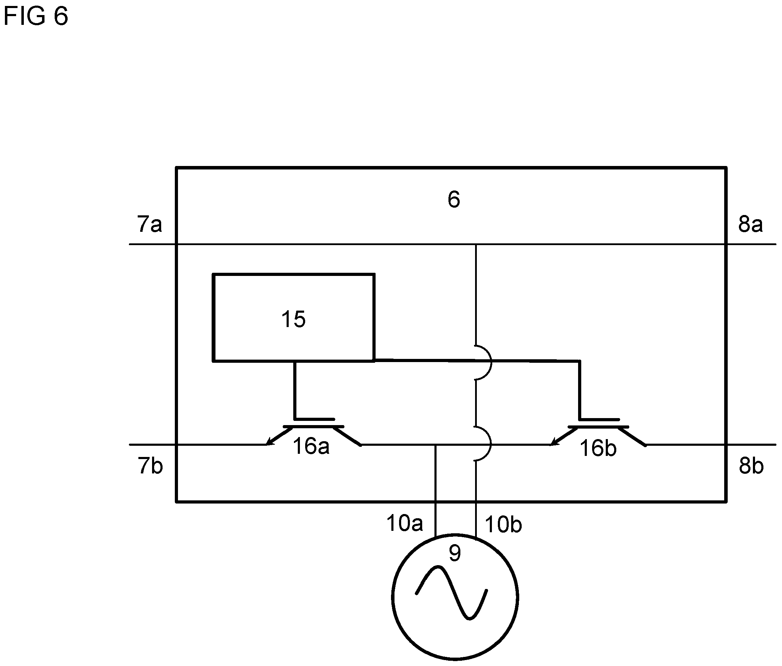

Now referring to FIG 6, a current source 6 can further comprise insulated-gate bipolar transistors. That is, the current source 6 comprises a first switch 16a and a second switch 16b.

A first switch 16a is disposed between the first electric wire 10a of the third pair of electric wires 10a, 10b and a second electric wire 7b. The second electric wire 7b belongs to the first pair of electric wires 7a, 7b. The first switch 16a electrically connects to the first electric wire 10a of the third pair of electric wires 10a, 10b. The first switch 16a also electrically connects to the second electric wire 7b of the first pair of electric wires 7a, 7b.

The first switch 16a is operable to conduct and to switch electric currents. An electric current through the first switch 16a originates from the first electric wire 10a of the third pair of electric wires 10a, 10b. An electric current through the first switch 16a flows toward the second electric wire 7b of the first pair of electric wires 7a, 7b. The electric current can then flow from the second electric wire 7b of the first pair of electric wires 7a, 7b toward the first outer coil 2a, 2b. The electric current can also flow from the second electric wire 7b of the first pair of electric wires 7a, 7b toward the first inner coil 11.

An electric current through the first switch 16a can also flow in the opposite direction. That is, the electric current originates from the second electric wire 7b of the first pair of electric wires 7a, 7b. The electric current through the first switch 16a then flows toward the first electric wire 10a of the third pair of electric wires 10a, 10b.

According to an aspect of the present disclosure, the first switch 16a comprises a first insulated-gate bipolar transistor. The first insulated-gate bipolar transistor preferably has a collector end and an emitter end. The collector end of the first insulated-gate bipolar transistor advantageously electrically connects to the first electric wire 10a of the third pair of electric wires 10a, 10b. The emitter end of the first insulated-gate bipolar transistor advantageously electrically connects to the second electric wire 7b of the first pair of electric wires 7a, 7b.

According to a related aspect of the present disclosure, the first switch 16a comprises a first plurality of insulated-gate bipolar transistors. The first plurality of insulated-gate bipolar transistors preferably has a collector end and an emitter end. The collector end of the first plurality of insulated-gate bipolar transistors connects to the first electric wire 10a of the third pair of electric wires 10a, 10b. The connection of the collector end preferably is an electric connection. The emitter end of the first plurality of insulated-gate bipolar transistors connects to the second electric wire 7b of the first pair of electric wires 7a, 7b. The connection of the emitter end preferably is an electric connection.

The first switch 16a can be controlled via a gate terminal. The gate terminal preferably electrically connects to a gate electrode of the first insulated-gate bipolar transistor. Advantageously, the gate terminal also mechanically connects to the gate electrode of the first insulated-gate bipolar transistor. The gate terminal also directly or indirectly electrically connects to the controller 15.

In other words, the first switch 16a is switched by the controller 15. Once the first switch 16a is switched into an on-state, the first switch 16a can be switched off again via a signal applied to its gate electrode. Unlike a thyristor, the first switch 16a needs not remain latched in the on-state until a current through the first switch 16a drops to zero or to substantially zero. More specifically, the first insulated-gate bipolar transistor of the first switch 16a is switched by the controller 15. It is also envisaged that a first plurality of insulated-gate bipolar transistors is switched by the controller 15.

The second switch 16b is disposed between the first electric wire 10a of the third pair of electric wires 10a, 10b and the second electric wire 8b. The second electric wire 8b belongs to the second pair of electric wires 8a, 8b. The second switch 16b electrically connects to the first electric wire 10a of the third pair of electric wires 10a, 10b. The second switch 16b also electrically connects to the second electric wire 8b of the second pair of electric wires 8a, 8b.

The second switch 16b is operable to conduct and to switch electric currents. An electric current through the second switch 16b flows toward the first electric wire 10a of the third pair of electric wires 10a, 10b. An electric current through the second switch 16b originates from the second electric wire 8b of the second pair of electric wires 8a, 8b. The electric current can thus flow from the second outer coil 3a, 3b toward the second electric wire 8b of the second pair of electric wires 8a, 8b. The electric current can thus flow from the second inner coil 12 toward the second electric wire 8b of the second pair of electric wires 8a, 8b.

An electric current through the second switch 16b can also flow in the opposite direction. That is, the electric current originates from the first electric wire 10a of the third pair of electric wires 10a, 10b. The electric current through the second switch 16b then flows toward the second electric wire 8b of the second pair of electric wires 8a, 8b.

According to an aspect of the present disclosure, the second switch 16b comprises a second insulated-gate bipolar transistor. The second insulated-gate bipolar transistor preferably has a collector end and an emitter end. The emitter end of the second insulated-gate bipolar transistor advantageously electrically connects to the first electric wire 10a of the third pair of electric wires 10a, 10b. The collector end of the second insulated-gate bipolar transistor advantageously electrically connects to the second electric wire 8b of the second pair of electric wires 8a, 8b.

According to a related aspect of the present disclosure, the second switch 16b comprises a second plurality of insulated-gate bipolar transistors. The second plurality of insulated-gate bipolar transistors preferably has a collector end and an emitter end. The emitter end of the second plurality of insulated-gate bipolar transistors connects to the first electric wire 10a of the third pair of electric wires 10a, 10b. The connection of the emitter end preferably is an electric connection. The collector end of the second plurality of insulated-gate bipolar transistors connects to the second electric wire 8b of the second pair of electric wires 8a, 8b. The connection of the collector end preferably is an electric connection.

The second switch 16b can be controlled via a gate terminal. The gate terminal preferably electrically connects to a gate electrode of the second insulated-gate bipolar transistor. Advantageously, the gate terminal also mechanically connects to the gate electrode of the second insulated-gate bipolar transistor. The gate terminal also directly or indirectly electrically connects to the controller 15.

In other words, the second switch 16b is switched by the controller 15. Once the second switch 16b is switched into an on-state, the second switch 16b can be switched off again via a signal applied to its gate electrode. Unlike a thyristor, the second switch 16b needs not remain latched in the on-state until a current through the second switch 16b drops to zero or to substantially zero. More specifically, the second insulated-gate bipolar transistor of the second switch 16b is switched by the controller 15. It is also envisaged that a second plurality of insulated-gate bipolar transistors is switched by the controller 15.

As described in detail herein, the present disclosure deals with a linear actuator assembly (1a; 1b) comprising:
an armature (4a; 4b), a first coil (2a, 2b; 11), and a second coil (3a, 3b; 12);
the armature (4a, 4b) cooperating with the first coil (2a, 2b; 11) and with the second coil (3a, 3b, 12) such that a first electric current through the first coil (2a, 2b; 11) causes a first magnetic flux urging the armature (4a; 4b) in a first direction and such that a second electric current through the second coil (2a, 2b; 12) causes a second magnetic flux urging the armature (4a; 4b) in a second direction, the second direction being opposite the first direction, the armature (4a; 4b), the first coil (2a, 2b; 11), and the second coil (4a, 3b; 12) thereby forming a linear actuator;
a current source (6) electrically connected to the first coil (2a, 2b; 11) for applying the first electric current through the first coil (2a, 2b; 11) and electrically connected to the second coil (3a, 3b; 12) for applying the second electric current through the second coil (3a, 3b; 12);
the current source (6) comprising a first active component (13a; 14a; 16a), the first active component (13a; 14a; 16a) being electrically connected in series with the first coil (2a, 2b; 11); and
the current source (6) comprising a second active component (13b; 14b; 16b), the second active component (13b; 14b; 16b) being different from the first active component (13a; 14a; 16a) and being electrically connected in series with the second coil (3a, 3b; 12).

The first coil (2a, 2b; 11) is advantageously different from the second coil (3a, 3b; 12).

It is envisaged that the armature (4a; 4b) cooperates with the first coil (2a, 2b; 11) and with the second coil (3a, 3b, 12) such that a first electric current through the first coil (2a, 2b; 11) causes a first magnetic flux density urging the armature (4a; 4b) in a first direction and such that a second electric current through the second coil (2a, 2b; 12) causes a second magnetic flux density urging the armature (4a; 4b) in a second direction, the second direction being opposite the first direction, the armature (4a; 4b), the first coil (2a, 2b; 11), and the second coil (4a, 3b; 12) thereby forming a linear actuator.

The armature (4a; 4b) preferably comprises a moveable armature. The armature (4a; 4b) ideally is a moveable armature. The armature (4a; 4b) preferably comprises a displaceable armature. The armature (4a; 4b) ideally is a displaceable armature.

According to an aspect of the present disclosure, the current source (6) comprises an electric current source. According to a special aspect of the present disclosure, the current source (6) is an electric current source.

Active components are, by way of non-limiting examples, diodes, transistors, thyristors, bipolar transistors, insulated-gate bipolar transistors. By contrast, resistors, capacitors, inductances are passive components. It is envisaged that the first active component (13a; 14a; 16a) comprises a first semiconducting junction device. It is still envisaged that the first active component (13a; 14a; 16a) is a first semiconducting junction device. It is also envisaged that the second active component (13b; 14b; 16b) comprises a second semiconducting junction device. It is still envisaged that the second active component (13b; 14b; 16b) is a second semiconducting junction device. In an embodiment, the first active component (13a; 14a; 16a) is a first active device. The second active component (13b; 14b; 16b) then is a second active device.

Electrically connected preferably means galvanically connected.

It is envisaged that the current source (6) mechanically connects to the first coil (2a, 2b; 11) and mechanically connects to the second coil (3a, 3b; 12). It is also envisaged that the current source (6) electrically and mechanically connects to the first coil (2a, 2b; 11) and electrically and mechanically connects to the second coil (3a, 3b; 12).

The instant disclosure also deals with any of the aforementioned linear actuator assemblies (1a; 1b),
wherein the armature (4a; 4b) exclusively cooperates with the first coil (2a, 2b; 11) and with the second coil (3a, 3b, 12) such that the first electric current through the first coil (2a, 2b; 11) causes the first magnetic flux urging the armature (4a; 4b) in the first direction and such that the second electric current through the second coil (2a, 2b; 12) causes the second magnetic flux urging the armature (4a; 4b) in the second direction.

Exclusive cooperation means that no member other than the first coil (2a, 2b; 11) and the second coil (3a, 3b; 12) directly or indirectly urges the armature (4a; 4b) in the first or in the second direction. More specifically, no spring urges the armature (4a; 4b) in the first or in the second direction. Also, no pneumatic and no hydraulic member urges the armature (4a; 4b) in the first or in the second direction.

The present disclosure also deals with any of the aforementioned linear actuator assemblies (1a; 1b), the linear actuator assembly (1a; 1b) comprising:
a pair of power connectors (10a, 10b) comprising a first power connector (10a) and a second power connector (10b);
a first pair of coil connectors (7a, 7b) comprising a first coil connector (7a) and a second coil connector (7b);
wherein the current source (6) electrically connects to the first coil (2a, 2b; 11) via the first pair of coil connectors (7a, 7b);
wherein the first active component (13a; 14a; 16a) is interposed between the first power connector (10a) and the second coil connector (7b) of the first pair of coil connectors (7a, 7b); and
wherein the first active component (13a; 14a; 16a) is electrically connected in series with the first coil (2a, 2b; 11) via the second coil connector (7b) of the first pair of coil connectors (7a, 7b).

The first power connector (10a) is advantageously different from the second power connector (10b). The first coil connector (7a) of the first pair of coil connectors (7a, 7b) is preferably different from the second coil connector (7b) of the first pair of coil connectors (7a, 7b).

In an embodiment, the first pair of power connectors (10a, 10b) comprises a first pair of electric power connectors (10a, 10b). In a special embodiment, the first pair of power connectors (10a, 10b) is a first pair of electric power connectors (10a, 10b). According to an aspect of the present disclosure, the first power connector (10a) comprises a first electric power connector (10a). According to a special aspect of the present disclosure, the first power connector (10a) is a first electric power connector (10a).

According to an aspect of the present disclosure, the second power connector (10b) comprises a second electric power connector (10b). According to a special aspect of the present disclosure, the second power connector (1 0b) is a second electric power connector (10b).

In an embodiment, the first pair of coil connectors (7a, 7b) comprises a first pair of electric coil connectors (7a, 7b). In a special embodiment, the first pair of coil connectors (7a, 7b) is a first pair of electric coil connectors (7a, 7b). According to an aspect of the present disclosure, the first coil connector (7a) of the first pair of coil connectors (7a, 7b) comprises a first electric coil connector (7a). According to a special aspect of the present disclosure, the first coil connector (7a) of the first pair of coil connectors (7a, 7b) is a first electric coil connector (7a). According to an aspect of the present disclosure, the second coil connector (7b) of the first pair of coil connectors (7a, 7b) comprises a second electric coil connector (7b). According to a special aspect of the present disclosure, the second coil connector (7b) of the first pair of coil connectors (7a, 7b) is a second electric coil connector (7b). According to an aspect of the present disclosure, the first coil connector (7a) of the first pair of coil connectors (7a, 7b) comprises a first mechanical coil connector (7a). According to a special aspect of the present disclosure, the first coil connector (7a) of the first pair of coil connectors (7a, 7b) is a first mechanical coil connector (7a). According to an aspect of the present disclosure, the second coil connector (7b) of the first pair of coil connectors (7a, 7b) comprises a second mechanical coil connector (7b). According to a special aspect of the present disclosure, the second coil connector (7b) of the first pair of coil connectors (7a, 7b) is a second mechanical coil connector (7b). According to an aspect of the present disclosure, the first coil connector (7a) of the first pair of coil connectors (7a, 7b) comprises a first electric and mechanical coil connector (7a). According to a special aspect of the present disclosure, the first coil connector (7a) of the first pair of coil connectors (7a, 7b) is a first electric and mechanical coil connector (7a). According to an aspect of the present disclosure, the second coil connector (7b) of the first pair of coil connectors (7a, 7b) comprises a second electric and mechanical coil connector (7b). According to a special aspect of the present disclosure, the second coil connector (7b) of the first pair of coil connectors (7a, 7b) is a second electric and mechanical coil connector (7b).

It is envisaged that the first active component (13a; 14a; 16a) is directly interposed between the first power connector (10a) and the second coil connector (7b) of the first pair of coil connectors (7a, 7b). Directly interposed means that no members other than the first active component (13a; 14a; 16a) are interposed between the first power connector (10a) and the second coil connector (7b) of the first pair of coil connectors (7a, 7b). It is also envisaged that the first active component (13a; 14a; 16a) is electrically interposed between the first power connector (10a) and the second coil connector (7b) of the first pair of coil connectors (7a, 7b). It is still envisaged that the first active component (13a; 14a; 16a) is directly and electrically interposed between the first power connector (10a) and the second coil connector (7b) of the first pair of coil connectors (7a, 7b).

The instant disclosure also deals with any of the aforementioned linear actuator assemblies (1a; 1b), the linear actuator assembly (1a; 1b) comprising:
a pair of power connectors (10a, 10b) comprising a first power connector (10a) and a second power connector (10b);
a second pair of coil connectors (8a, 8b) comprising a first coil connector (8a) and a second coil connector (8b);
wherein the current source (6) electrically connects to the second coil (3a, 3b; 12) via the second pair of coil connectors (8a, 8b);
wherein the second active component (13b; 14b; 16b) is interposed between the first power connector (10a) and the second coil connector (8b) of the second pair of coil connectors (8a, 8b); and
wherein the second active component (13b; 14b; 16b) is electrically connected in series with the second coil (3a, 3b; 12) via the second coil connector (8b) of the second pair of coil connectors (8a, 8b).

The first coil connector (8a) of the second pair of coil connectors (8a, 8b) is preferably different from the second coil connector (8b) of the second pair of coil connectors (8a, 8b).

In an embodiment, the second pair of coil connectors (8a, 8b) comprises a second pair of electric coil connectors (8a, 8b). In a special embodiment, the second pair of coil connectors (8a, 8b) is a second pair of electric coil connectors (8a, 8b). According to an aspect of the present disclosure, the first coil connector (8a) of the second pair of coil connectors (8a, 8b) comprises a first electric coil connector (8a). According to a special aspect of the present disclosure, the first coil connector (8a) of the second pair of coil connectors (8a, 8b) is a first electric coil connector (8a). According to an aspect of the present disclosure, the second coil connector (8b) of the second pair of coil connectors (8a, 8b) comprises a second electric coil connector (8b). According to a special aspect of the present disclosure, the second coil connector (8b) of the second pair of coil connectors (8a, 8b) is a second electric coil connector (8b). According to an aspect of the present disclosure, the first coil connector (8a) of the second pair of coil connectors (8a, 8b) comprises a first mechanical coil connector (8a). According to a special aspect of the present disclosure, the first coil connector (8a) of the second pair of coil connectors (8a, 8b) is a first mechanical coil connector (8a). According to an aspect of the present disclosure, the second coil connector (8b) of the second pair of coil connectors (8a, 8b) comprises a second mechanical coil connector (8b). According to a special aspect of the present disclosure, the second coil connector (8b) of the second pair of coil connectors (8a, 8b) is a second mechanical coil connector (8b). According to an aspect of the present disclosure, the first coil connector (8a) of the second pair of coil connectors (8a, 8b) comprises a first electric and mechanical coil connector (8a). According to a special aspect of the present disclosure, the first coil connector (8a) of the second pair of coil connectors (8a, 8b) is a first electric and mechanical coil connector (8a). According to an aspect of the present disclosure, the second coil connector (8b) of the second pair of coil connectors (8a, 8b) comprises a second electric and mechanical coil connector (8b). According to a special aspect of the present disclosure, the second coil connector (8b) of the second pair of coil connectors (8a, 8b) is a second electric and mechanical coil connector (8b).

It is envisaged that the second active component (13b; 14b; 16b) is directly interposed between the first power connector (10a) and the second coil connector (8b) of the second pair of coil connectors (8a, 8b). Directly interposed means that no members other than the second active component (13b; 14b; 16b) are interposed between the first power connector (10a) and the second coil connector (8b) of the second pair of coil connectors (8a, 8b). It is also envisaged that the second active component (13b; 14b; 16b) is electrically interposed between the first power connector (10a) and the second coil connector (8b) of the second pair of coil connectors (8a, 8b). It is still envisaged that the second active component (13b; 14b; 16b) is directly and electrically interposed between the first power connector (10a) and the second coil connector (8b) of the second pair of coil connectors (8a, 8b).

The instant disclosure also deals with any of the aforementioned linear actuator assemblies (1a; 1b) involving a first active component (13a; 14a; 16a) and a pair of power connectors (10a, 10b),
wherein the first active component (13a; 14a; 16a) comprises a first diode having an anode terminal and a cathode terminal;
wherein the anode terminal of the first diode electrically connects to the first power connector (10a) of the pair of power connectors (10a, 10b); and
wherein the cathode terminal of the first diode electrically connects to the second coil connector (7b) of the first pair of coil connectors (7a, 7b).

The present disclosure also pertains to any of the aforementioned linear actuator assemblies (1a; 1b) involving a first active component (13a; 14a; 16a) and a pair of power connectors (10a, 10b),
wherein the first active component (13a; 14a; 16a) is a first diode having an anode terminal and a cathode terminal;
wherein the anode terminal of the first diode electrically connects to the first power connector (10a) of the pair of power connectors (10a, 10b); and
wherein the cathode terminal of the first diode electrically connects to the second coil connector (7b) of the first pair of coil connectors (7a, 7b).

The present disclosure also pertains to any of the aforementioned linear actuator assemblies (1a; 1b) involving a second active component (13b; 14b; 16b) and a pair of power connectors (10a, 10b), wherein the second active component (13b; 14b; 16b) comprises a second diode having an anode terminal and a cathode terminal;
wherein the cathode terminal of the second diode electrically connects to the first power connector (10a) of the pair of power connectors (10a, 10b); and
wherein the anode terminal of the second diode electrically connects to the second coil connector (8b) of the second pair of coil connectors (8a, 8b).

The present disclosure also pertains to any of the aforementioned linear actuator assemblies (1a; 1b) involving a second active component (13b; 14b; 16b) and a pair of power connectors (10a, 10b),
wherein the second active component (13b; 14b; 16b) is a second diode having an anode terminal and a cathode terminal;
wherein the cathode terminal of the second diode electrically connects to the first power connector (10a) of the pair of power connectors (10a, 10b); and
wherein the anode terminal of the second diode electrically connects to the second coil connector (8b) of the second pair of coil connectors (8a, 8b).

The instant disclosure also deals with any of the aforementioned linear actuator assemblies (1a; 1b) involving a first active component (13a; 14a; 16a) and a pair of power connectors (10a, 10b),
wherein the linear actuator assembly (1a; 1b) comprises a controller (15) having a first output pin;
wherein the first active component (13a; 14a; 16a) comprises a first controlled rectifier having a gate terminal and an anode terminal and a cathode terminal;
wherein the anode terminal of the first controlled rectifier electrically connects to the first power connector (10a) of the pair of power connectors (10a, 10b);
wherein the cathode terminal of the first controlled rectifier electrically connects to the second coil connector (7b) of the first pair of coil connectors (7a, 7b); and
wherein the gate terminal of the first controlled rectifier electrically connects to the first output pin of the controller (15) such that the controller (15) controls switching operations of the first controlled rectifier.

The gate terminal of the first controlled rectifier preferably electrically connects to the first output pin of the controller (15) such that the controller (15) is configured to turn the first controlled rectifier into a conducting state.

The present disclosure also pertains to any of the aforementioned linear actuator assemblies (1a; 1b) involving a first active component (13a; 14a; 16a) and a pair of power connectors (10a, 10b),
wherein the current source (6) comprises a controller (15) having a first output pin;
wherein the first active component (13a; 14a; 16a) comprises a first controlled rectifier having a gate terminal and an anode terminal and a cathode terminal;
wherein the anode terminal of the first controlled rectifier electrically connects to the first power connector (10a) of the pair of power connectors (10a, 10b);
wherein the cathode terminal of the first controlled rectifier electrically connects to the second coil connector (7b) of the first pair of coil connectors (7a, 7b); and
wherein the gate terminal of the first controlled rectifier electrically connects to the first output pin of the controller (15) such that the controller (15) controls switching operations of the controlled rectifier.

The instant disclosure also deals with any of the aforementioned linear actuator assemblies (1a; 1b) involving a first controlled rectifier, wherein the first controlled rectifier comprises a first thyristor.

The present disclosure also pertains to any of the aforementioned linear actuator assemblies (1a; 1b) involving a first controlled rectifier, wherein the first controlled rectifier is a first thyristor.

The gate terminal of the first thyristor preferably electrically connects to the first output pin of the controller (15) such that the controller (15) is configured to turn the first thyristor into a conducting state.

The present disclosure also deals with any of the aforementioned linear actuator assemblies (1a; 1b) involving a second active component (13b; 14b; 16b) and a pair of power connectors (10a, 10b),
wherein the linear actuator assembly (1a; 1b) comprises a controller (15) having a second output pin;
wherein the second active component (13b; 14b; 16b) comprises a second controlled rectifier having a gate terminal and an anode terminal and a cathode terminal;
wherein the cathode terminal of the second controlled rectifier electrically connects to the first power connector (10a) of the pair of power connectors (10a, 10b);
wherein the anode terminal of the second controlled rectifier electrically connects to the second coil connector (8b) of the second pair of coil connectors (8a, 8b); and
wherein the gate terminal of the second controlled rectifier electrically connects to the second output pin of the controller (15) such that the controller (15) controls switching operations of the second controlled rectifier.

The second output pin is advantageously different from the first output pin. In an alternate embodiment, the second output pin is the same as the first output pin.

The gate terminal of the second controlled rectifier preferably electrically connects to the second output pin of the controller (15) such that the controller (15) is configured to turn the second controlled rectifier into a conducting state.

The present disclosure also pertains to any of the aforementioned linear actuator assemblies (1a; 1b) involving a second active component (13b; 14b; 16b) and a pair of power connectors (10a, 10b),
wherein the current source (6) comprises a controller (15) having a second output pin;
wherein the second active component (13b; 14b; 16b) comprises a second controlled rectifier having a gate terminal and an anode terminal and a cathode terminal;
wherein the cathode terminal of the second controlled rectifier electrically connects to the first power connector (10a) of the pair of power connectors (10a, 10b);
wherein the anode terminal of the second controlled rectifier electrically connects to the second coil connector (8b) of the second pair of coil connectors (8a, 8b); and
wherein the gate terminal of the second controlled rectifier electrically connects to the second output pin of the controller (15) such that the controller (15) controls switching operations of the second controlled rectifier.

The present disclosure also deals with any of the aforementioned linear actuator assemblies (1a; 1b) involving a second controlled rectifier, wherein the second controlled rectifier comprises a second thyristor.

The present disclosure also pertains to any of the aforementioned linear actuator assemblies (1a; 1b) involving a second controlled rectifier, wherein the second controlled rectifier is a second thyristor.

The gate terminal of the second thyristor preferably electrically connects to the second output pin of the controller (15) such that the controller (15) is configured to turn the second thyristor into a conducting state.

The instant disclosure also deals with any of the aforementioned linear actuator assemblies (1a; 1b) involving a pair of power connectors (10a, 10b), the linear actuator assembly (1a; 1b) comprising:
a power source (9) electrically connected to the current source (6) via the pair of power connectors (10a, 10b); and
wherein the power source (9) is configured to apply an alternating electric current to the pair of power connectors (10a, 10b).

The present disclosure also pertains to any of the aforementioned linear actuator assemblies (1a; 1b) involving a pair of power connectors (10a, 10b),
wherein the linear actuator assembly (1a; 1b) comprises a power source (9) electrically connected to the current source (6) via the pair of power connectors (10a, 10b); and
wherein the power source (9) is configured to apply an alternating electric voltage between the pair of power connectors (10a, 10b).

The instant disclosure also deals with any of the aforementioned linear actuator assemblies (1a; 1b) involving a first active component (13a; 14a; 16a) and a pair of power connectors (10a, 10b), wherein the linear actuator assembly (1a; 1b) comprises a controller (15) having a third output pin;
wherein the first active component (13a; 14a; 16a) comprises a first switch having a gate terminal and a collector terminal and an emitter terminal;
wherein the collector terminal of the first switch electrically connects to the first power connector (10a) of the pair of power connectors (10a, 10b);
wherein the emitter terminal of the first switch electrically connects to the second coil connector (7b) of the first pair of coil connectors (7a, 7b); and
wherein the gate terminal of the first switch electrically connects to the third output pin of the controller (15) such that the controller (15) controls switching operations of the first switch.

The third output pin is advantageously different from the first output pin and from the second output pin. In an alternate embodiment, the third output pin is the same as the first output pin and is the same as the second output pin.

The present disclosure also pertains to any of the aforementioned linear actuator assemblies (1a; 1b) involving a first active component (13a; 14a; 16a) and a pair of power connectors (10a, 10b),
wherein the current source (6) comprises a controller (15) having a third output pin;
wherein the first active component (13a; 14a; 16a) comprises a first switch having a gate terminal and a collector terminal and an emitter terminal;
wherein the collector terminal of the first switch electrically connects to the first power connector (10a) of the pair of power connectors (10a, 10b);
wherein the emitter terminal of the first switch electrically connects to the second coil connector (7b) of the first pair of coil connectors (7a, 7b); and
wherein the gate terminal of the first switch electrically connects to the third output pin of the controller (15) such that the controller (15) controls switching operations of the first switch.

The instant disclosure also deals with any of the aforementioned linear actuator assemblies (1a; 1b) involving a first switch, wherein the first switch comprises a first insulated-gate bipolar transistor.

The present disclosure also pertains to any of the aforementioned linear actuator assemblies (1a; 1b) involving a first switch, wherein the first switch is a first insulated-gate bipolar transistor.

The instant disclosure also deals with any of the aforementioned linear actuator assemblies (1a; 1b) involving a pair of power connectors (10a, 10b), the linear actuator assembly (1a; 1b) comprising:
a power source (9) electrically connected to the current source (6) via the pair of power connectors (10a, 10b); and
wherein the power source (9) is configured to apply a direct electric current to the pair of power connectors (10a, 10b).

The present disclosure also pertains to any of the aforementioned linear actuator assemblies (1a; 1b) involving a pair of power connectors (10a, 10b),
wherein the linear actuator assembly (1a; 1b) comprises a power source (9) electrically connected to the current source (6) via the pair of power connectors (10a, 10b); and
wherein the power source (9) is configured to apply a direct electric voltage between the pair of power connectors (10a, 10b).

The instant disclosure also deals with any of the aforementioned linear actuator assemblies (1a; 1b) involving a power source (9) providing direct electric currents and/or direct electric voltages, wherein the power source (9) comprises a power-over-ethernet installation in accordance with at least one of the standards:
- IEEE 802.3af-2003 of June 2003 and/or
- IEEE 802.3at-2009 of September 2009 and/or
- IEEE 802.3-2012 of December 2012.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the claims.

### Reference numerals

1a, 1b linear actuator assemblies
2a, 2b coil
3a, 3b coil
4a, 4b armatures
5a, 5b double arrows
6 current source
7a, 7b pair of wires
8a, 8b pair of wires
9 power source
10a, 10b pair of wires
11 coil
12 coil
13a, 13b rectifiers
14a, 14b controlled rectifiers
15 controller
16a, 16b switches

## Claims

1. A linear actuator assembly (1b) comprising:
an armature (4b), a first coil (11), and a second coil (12);
the armature (4b) cooperating with the first coil (11) and with the second coil (12) such that a first electric current through the first coil (11) causes a first magnetic flux urging the armature (4b) in a first direction and such that a second electric current through the second coil (12) causes a second magnetic flux urging the armature (4b) in a second direction, the second direction being opposite the first direction, the armature (4b), the first coil (11), and the second coil (12) thereby forming a linear actuator;
a current source (6) electrically connected to the first coil (11) for applying the first electric current through the first coil (11) and electrically connected to the second coil (12) for applying the second electric current through the second coil (12);
the current source (6) comprising a first active component (13a; 14a; 16a), the first active component (13a; 14a; 16a) being electrically connected in series with the first coil (11); and
the current source (6) comprising a second active component (13b; 14b; 16b), the second active component (13b; 14b; 16b) being different from the first active component (13a; 14a; 16a) and being electrically connected in series with the second coil (12);
**characterised in that**
the first coil (11) and the second coil (12) are arranged inside the armature (4b).

2. The linear actuator assembly (1b) according to claim 1,
wherein the armature (4b) exclusively cooperates with the first coil (11) and with the second coil (12) such that the first electric current through the first coil (11) causes the first magnetic flux urging the armature (4b) in the first direction and such that the second electric current through the second coil (12) causes the second magnetic flux urging the armature (4b) in the second direction.

3. The linear actuator assembly (1b) according to any of the claims 1 to 2, the linear actuator assembly (1b) comprising:
a pair of power connectors (10a, 10b) comprising a first power connector (10a) and a second power connector (10b);
a first pair of coil connectors (7a, 7b) comprising a first coil connector (7a) and a second coil connector (7b);
wherein the current source (6) electrically connects to the first coil (11) via the first pair of coil connectors (7a, 7b);
wherein the first active component (13a; 14a; 16a) is interposed between the first power connector (10a) and the second coil connector (7b) of the first pair of coil connectors (7a, 7b); and
wherein the first active component (13a; 14a; 16a) is electrically connected in series with the first coil (11) via the second coil connector (7b) of the first pair of coil connectors (7a, 7b).

4. The linear actuator assembly (1b) according to any of the claims 1 to 3, the linear actuator assembly (1b) comprising:
a pair of power connectors (10a, 10b) comprising a first power connector (10a) and a second power connector (10b);
a second pair of coil connectors (8a, 8b) comprising a first coil connector (8a) and a second coil connector (8b);
wherein the current source (6) electrically connects to the second coil (12) via the second pair of coil connectors (8a, 8b);
wherein the second active component (13b; 14b; 16b) is interposed between the first power connector (10a) and the second coil connector (8b) of the second pair of coil connectors (8a, 8b); and
wherein the second active component (13b; 14b; 16b) is electrically connected in series with the second coil (12) via the second coil connector (8b) of the second pair of coil connectors (8a, 8b).

5. The linear actuator assembly (1b) according to claim 3,
wherein the first active component (13a; 14a; 16a) comprises a first diode having an anode terminal and a cathode terminal;
wherein the anode terminal of the first diode electrically connects to the first power connector (10a) of the pair of power connectors (10a, 10b); and
wherein the cathode terminal of the first diode electrically connects to the second coil connector (7b) of the first pair of coil connectors (7a, 7b).

6. The linear actuator assembly (1b) according to claim 4,
wherein the second active component (13b; 14b; 16b) comprises a second diode having an anode terminal and a cathode terminal;
wherein the cathode terminal of the second diode electrically connects to the first power connector (10a) of the pair of power connectors (10a, 10b); and
wherein the anode terminal of the second diode electrically connects to the second coil connector (8b) of the second pair of coil connectors (8a, 8b).

7. The linear actuator assembly (1b) according to any of the claims 3 or 5,
wherein the linear actuator assembly (1b) comprises a controller (15) having a first output pin;
wherein the first active component (13a; 14a; 16a) comprises a first controlled rectifier having a gate terminal and an anode terminal and a cathode terminal;
wherein the anode terminal of the first controlled rectifier electrically connects to the first power connector (10a) of the pair of power connectors (10a, 10b);
wherein the cathode terminal of the first controlled rectifier electrically connects to the second coil connector (7b) of the first pair of coil connectors (7a, 7b); and
wherein the gate terminal of the first controlled rectifier electrically connects to the first output pin of the controller (15) such that the controller (15) controls switching operations of the first controlled rectifier.

8. The linear actuator assembly (1b) according to claim 7, wherein the first controlled rectifier comprises a first thyristor.

9. The linear actuator assembly (1b) according to any of the claims 4 or 6,
wherein the linear actuator assembly (1b) comprises a controller (15) having a second output pin;
wherein the second active component (13b; 14b; 16b) comprises a second controlled rectifier having a gate terminal and an anode terminal and a cathode terminal;
wherein the cathode terminal of the second controlled rectifier electrically connects to the first power connector (10a) of the pair of power connectors (10a, 10b);
wherein the anode terminal of the second controlled rectifier electrically connects to the second coil connector (8b) of the second pair of coil connectors (8a, 8b); and
wherein the gate terminal of the second controlled rectifier electrically connects to the second output pin of the controller (15) such that the controller (15) controls switching operations of the second controlled rectifier.

10. The linear actuator assembly (1b) according to claim 9, wherein the second controlled rectifier comprises a second thyristor.

11. The linear actuator assembly (1b) according to any of the claims 5 to 10, the linear actuator assembly (1b) comprising:
a power source (9) electrically connected to the current source (6) via the pair of power connectors (10a, 10b); and
wherein the power source (9) is configured to apply an alternating electric current to the pair of power connectors (10a, 10b).

12. The linear actuator assembly (1b) according to claim 3,
wherein the linear actuator assembly (1b) comprises a controller (15) having a third output pin;
wherein the first active component (13a; 14a; 16a) comprises a first switch having a gate terminal and a collector terminal and an emitter terminal;
wherein the collector terminal of the first switch electrically connects to the first power connector (10a) of the pair of power connectors (10a, 10b);
wherein the emitter terminal of the first switch electrically connects to the second coil connector (7b) of the first pair of coil connectors (7a, 7b); and
wherein the gate terminal of the first switch electrically connects to the third output pin of the controller (15) such that the controller (15) controls switching operations of the first switch.

13. The linear actuator assembly (1b) according to claim 12, wherein the first switch comprises a first insulated-gate bipolar transistor.

14. The linear actuator assembly (1b) according to any of the claims 12 to 13, the linear actuator assembly (1b) comprising:
a power source (9) electrically connected to the current source (6) via the pair of power connectors (10a, 10b); and
wherein the power source (9) is configured to apply a direct electric current to the pair of power connectors (10a, 10b).

## Patentansprüche

1. Linearaktorbaugruppe (1b), die Folgendes umfasst:
einen Anker (4b), eine erste Spule (11) und eine zweite Spule (12),
wobei der Anker (4b) mit der ersten Spule (11) und mit der zweiten Spule (12) so zusammenwirkt, dass ein durch die erste Spule (11) fließender erster elektrischer Strom einen ersten Magnetfluss verursacht, der den Anker (4b) in eine erste Richtung drückt, und dass ein durch die zweite Spule (12) fließender zweiter elektrischer Strom einen zweiten Magnetfluss verursacht, der den Anker (4b) in eine zweite Richtung drückt, wobei die zweite Richtung der ersten Richtung entgegengesetzt ist, wodurch der Anker (4b), die erste Spule (11) und die zweite Spule (12) einen Linearaktor bilden,
eine Stromquelle (6), die zum Anlegen des ersten elektrischen Stroms an die erste Spule (11) elektrisch an die erste Spule (11) und zum Anlegen des zweiten elektrischen Stroms an die zweite Spule (12) elektrisch an die zweite Spule (12) angeschlossen ist,
wobei die Stromquelle (6) eine erste aktive Komponente (13a; 14a; 16a) umfasst, die mit der ersten Spule (11) elektrisch in Reihe geschaltet ist, und
wobei die Stromquelle (6) eine zweite aktive Komponente (13b; 14b; 16b) umfasst, die sich von der ersten aktiven Komponente (13a; 14a; 16a) unterscheidet und mit der zweiten Spule (12) elektrisch in Reihe geschaltet ist,
**dadurch gekennzeichnet, dass**
die erste Spule (11) und die zweite Spule (12) innerhalb des Ankers (4b) angeordnet sind.

2. Die Linearaktorbaugruppe (1b) nach Anspruch 1,
wobei der Anker (4b) ausschließlich mit der ersten Spule (11) und mit der zweiten Spule (12) so zusammenwirkt, dass der durch die erste Spule (11) fließende erste elektrische Strom den ersten Magnetfluss verursacht, der den Anker (4b) in die erste Richtung drückt, und dass der durch die zweite Spule (12) fließende zweite elektrische Strom den zweiten Magnetfluss verursacht, der den Anker (4b) in die zweite Richtung drückt.

3. Die Linearaktorbaugruppe (1b) nach einem der Ansprüche 1 bis 2, wobei die Linearaktorbaugruppe (1b) Folgendes umfasst:
ein Paar Elektrizitätsanschlüsse (10a, 10b), die einen ersten Elektrizitätsanschluss (10a) und einen zweiten Elektrizitätsanschluss (10b) umfassen,
ein erstes Paar Spulenanschlüsse (7a, 7b), die einen ersten Spulenanschluss (7a) und einen zweiten Spulenanschluss (7b) umfassen,
wobei die Stromquelle (6) über das erste Paar Spulenanschlüsse (7a, 7b) elektrisch an die erste Spule (11) angeschlossen ist,
wobei die erste aktive Komponente (13a; 14a; 16a) zwischen dem ersten Elektrizitätsanschluss (10a) und dem zweiten Spulenanschluss (7b) des ersten Paars Spulenanschlüsse (7a, 7b) angeordnet ist und
wobei die erste aktive Komponente (13a; 14a; 16a) über den zweiten Spulenanschluss (7b) des ersten Paars Spulenanschlüsse (7a, 7b) mit der ersten Spule (11) elektrisch in Reihe geschaltet ist.

4. Die Linearaktorbaugruppe (1b) nach einem der Ansprüche 1 bis 3, wobei die Linearaktorbaugruppe (1b) Folgendes umfasst:
ein Paar Elektrizitätsanschlüsse (10a, 10b), die einen ersten Elektrizitätsanschluss (10a) und einen zweiten Elektrizitätsanschluss (10b) umfassen,
ein zweites Paar Spulenanschlüsse (8a, 8b), die einen ersten Spulenanschluss (8a) und einen zweiten Spulenanschluss (8b) umfassen,
wobei die Stromquelle (6) über das zweite Paar Spulenanschlüsse (8a, 8b) elektrisch an die zweite Spule (12) angeschlossen ist,
wobei die zweite aktive Komponente (13b; 14b; 16b) zwischen dem ersten Elektrizitätsanschluss (10a) und dem zweiten Spulenanschluss (8b) des zweiten Paars Spulenanschlüsse (8a, 8b) angeordnet ist und
wobei die zweite aktive Komponente (13b; 14b; 16b) über den zweiten Spulenanschluss (8b) des zweiten Paars Spulenanschlüsse (8a, 8b) mit der zweiten Spule (12) elektrisch in Reihe geschaltet ist.

5. Die Linearaktorbaugruppe (1b) nach Anspruch 3,
wobei die erste aktive Komponente (13a; 14a; 16a) eine erste Diode mit einer Anode und einer Kathode umfasst,
wobei die Anode der ersten Diode elektrisch an den ersten Elektrizitätsanschluss (10a) des Paars Elektrizitätsanschlüsse (10a, 10b) angeschlossen ist und
wobei die Kathode der ersten Diode elektrisch an den zweiten Spulenanschluss (7b) des ersten Paars Spulenanschlüsse (7a, 7b) angeschlossen ist.

6. Die Linearaktorbaugruppe (1b) nach Anspruch 4,
wobei die zweite aktive Komponente (13b; 14b; 16b) eine zweite Diode mit einer Anode und einer Kathode umfasst,
wobei die Kathode der zweiten Diode elektrisch an den ersten Elektrizitätsanschluss (10a) des Paars Elektrizitätsanschlüsse (10a, 10b) angeschlossen ist und
wobei die Anode der zweiten Diode elektrisch an den zweiten Spulenanschluss (8b) des zweiten Paars Spulenanschlüsse (8a, 8b) angeschlossen ist.

7. Die Linearaktorbaugruppe (1b) nach einem der Ansprüche 3 oder 5,
wobei die Linearaktorbaugruppe (1b) eine Steuerung (15) mit einem ersten Ausgangsstift umfasst,
wobei die erste aktive Komponente (13a; 14a; 16a) einen ersten gesteuerten Gleichrichter mit einem Gate und einer Anode und einer Kathode umfasst,
wobei die Anode des ersten gesteuerten Gleichrichters elektrisch an den ersten Elektrizitätsanschluss (10a) des Paars Elektrizitätsanschlüsse (10a, 10b) angeschlossen ist,
wobei die Kathode des ersten gesteuerten Gleichrichters elektrisch an den zweiten Spulenanschluss (7b) des ersten Paars Spulenanschlüsse (7a, 7b) angeschlossen ist und
wobei das Gate des ersten gesteuerten Gleichrichters elektrisch so an den ersten Ausgangsstift der Steuerung (15) angeschlossen ist, dass die Steuerung (15) Schaltvorgänge des ersten gesteuerten Gleichrichters steuert.

8. Die Linearaktorbaugruppe (1b) nach Anspruch 7, wobei der erste gesteuerte Gleichrichter einen ersten Thyristor umfasst.

9. Die Linearaktorbaugruppe (1b) nach einem der Ansprüche 4 oder 6,
wobei die Linearaktorbaugruppe (1b) eine Steuerung (15) mit einem zweiten Ausgangsstift umfasst,
wobei die zweite aktive Komponente (13b; 14b; 16b) einen zweiten gesteuerten Gleichrichter mit einem Gate und einer Anode und einer Kathode umfasst,
wobei die Kathode des zweiten gesteuerten Gleichrichters elektrisch an den ersten Elektrizitätsanschluss (10a) des Paars Elektrizitätsanschlüsse (10a, 10b) angeschlossen ist,
wobei die Anode des zweiten gesteuerten Gleichrichters elektrisch an den zweiten Spulenanschluss (8b) des zweiten Paars Spulenanschlüsse (8a, 8b) angeschlossen ist und
wobei das Gate des zweiten gesteuerten Gleichrichters elektrisch so an den zweiten Ausgangsstift der Steuerung (15) angeschlossen ist, dass die Steuerung (15) Schaltvorgänge des zweiten gesteuerten Gleichrichters steuert.

10. Die Linearaktorbaugruppe (1b) nach Anspruch 9, wobei der zweite gesteuerte Gleichrichter einen zweiten Thyristor umfasst.

11. Die Linearaktorbaugruppe (1b) nach einem der Ansprüche 5 bis 10, wobei die Linearaktorbaugruppe (1b) Folgendes umfasst:
eine Stromquelle (9), die über das Paar Elektrizitätsanschlüsse (10a, 10b) elektrisch an die Stromquelle (6) angeschlossen ist, und
wobei die Stromquelle (9) so konfiguriert ist, dass sie einen elektrischen Wechselstrom an das Paar Elektrizitätsanschlüsse (10a, 10b) anlegt.

12. Die Linearaktorbaugruppe (1b) nach Anspruch 3,
wobei die Linearaktorbaugruppe (1b) eine Steuerung (15) mit einem dritten Ausgangsstift umfasst,
wobei die erste aktive Komponente (13a; 14a; 16a) einen ersten Schalter mit einem Gate und einem Kollektor und einem Emitter umfasst,
wobei der Kollektor des ersten Schalters elektrisch an den ersten Elektrizitätsanschluss (10a) des Paars Elektrizitätsanschlüsse (10a, 10b) angeschlossen ist,
wobei der Emitter des ersten Schalters elektrisch an den zweiten Spulenanschluss (7b) des ersten Paars Spulenanschlüsse (7a, 7b) angeschlossen ist und
wobei das Gate des ersten Schalters elektrisch so an den dritten Ausgangsstift der Steuerung (15) angeschlossen ist, dass die Steuerung (15) Schaltvorgänge des ersten Schalters steuert.

13. Die Linearaktorbaugruppe (1b) nach Anspruch 12, wobei der erste Schalter einen ersten Bipolartransistor mit isolierter Gate-Elektrode umfasst.

14. Die Linearaktorbaugruppe (1b) nach einem der Ansprüche 12 bis 13, wobei die Linearaktorbaugruppe (1b) Folgendes umfasst:
eine Stromquelle (9), die über das Paar Elektrizitätsanschlüsse (10a, 10b) elektrisch an die Stromquelle (6) angeschlossen ist, und
wobei die Stromquelle (9) so konfiguriert ist, dass sie einen elektrischen Gleichstrom an das Paar Elektrizitätsanschlüsse (10a, 10b) anlegt.

## Revendications

1. Assemblage d'actionneur linéaire (1b) comprenant :
une armature (4b), une première bobine (11) et une deuxième bobine (12) ;
l'armature (4b) coopérant avec la première bobine (11) et avec la deuxième bobine (12) de sorte qu'un premier courant électrique traversant la première bobine (11) provoque un premier flux magnétique poussant l'armature (4b) dans une première direction et de sorte qu'un deuxième courant électrique traversant la deuxième bobine (12) provoque un deuxième flux magnétique poussant l'armature (4b) dans une deuxième direction, la deuxième direction étant opposée à la première direction, l'armature (4b), la première bobine (11) et la deuxième bobine (12) formant ainsi un actionneur linéaire ;
une source de courant (6) connectée électriquement à la première bobine (11) pour appliquer le premier courant électrique à travers la première bobine (11) et connectée électriquement à la deuxième bobine (12) pour appliquer le deuxième courant électrique à travers la deuxième bobine (12) ;
la source de courant (6) comprenant un premier composant actif (13a ; 14a ; 16a), le premier composant actif (13a ; 14a ; 16a) étant connecté électriquement en série avec la première bobine (11) ; et
la source de courant (6) comprenant un deuxième composant actif (13b ; 14b ; 16b), le deuxième composant actif (13b ; 14b ; 16b) étant différent du premier composant actif (13a ; 14a ; 16a) et étant connecté électriquement en série avec la deuxième bobine (12) ;
**caractérisé en ce que**
la première bobine (11) et la deuxième bobine (12) sont disposées à l'intérieur de l'armature (4b).

2. L'assemblage d'actionneur linéaire (1b) selon la revendication 1,
dans lequel l'armature (4b) coopère exclusivement avec la première bobine (11) et avec la deuxième bobine (12) de sorte que le premier courant électrique à travers la première bobine (11) provoque le premier flux magnétique poussant l'armature (4b) dans la première direction et de sorte que le deuxième courant électrique à travers la deuxième bobine (12) provoque le deuxième flux magnétique poussant l'armature (4b) dans la deuxième direction.

3. L'assemblage d'actionneur linéaire (1b) selon l'une quelconque des revendications 1 à 2, l'assemblage d'actionneur linéaire (1b) comprenant :
une paire de connecteurs d'alimentation (10a, 10b) comprenant un premier connecteur d'alimentation (10a) et un deuxième connecteur d'alimentation (10b) ;
une première paire de connecteurs de bobine (7a, 7b) comprenant un premier connecteur de bobine (7a) et un deuxième connecteur de bobine (7b) ;
dans lequel la source de courant (6) se connecte électriquement à la première bobine (11) via la première paire de connecteurs de bobine (7a, 7b) ;
dans lequel le premier composant actif (13a ; 14a ; 16a) est interposé entre le premier connecteur d'alimentation (10a) et le deuxième connecteur de bobine (7b) de la première paire de connecteurs de bobine (7a, 7b) ; et dans lequel le premier composant actif (13a ; 14a ; 16a) est connecté électriquement en série avec la première bobine (11) via le deuxième connecteur de bobine (7b) de la première paire de connecteurs de bobine (7a, 7b).

4. L'assemblage d'actionneur linéaire (1b) selon l'une quelconque des revendications 1 à 3, l'assemblage d'actionneur linéaire (1b) comprenant :
une paire de connecteurs d'alimentation (10a, 10b) comprenant un premier connecteur d'alimentation (10a) et un deuxième connecteur d'alimentation (10b) ;
une deuxième paire de connecteurs de bobine (8a, 8b) comprenant un premier connecteur de bobine (8a) et un deuxième connecteur de bobine (8b) ;
dans lequel la source de courant (6) se connecte électriquement à la deuxième bobine (12) via la deuxième paire de connecteurs de bobine (8a, 8b) ;
dans lequel le deuxième composant actif (13b ; 14b ; 16b) est interposé entre le premier connecteur d'alimentation (10a) et le deuxième connecteur de bobine (8b) de la deuxième paire de connecteurs de bobine (8a, 8b) ; et
dans lequel le deuxième composant actif (13b ; 14b ; 16b) est connecté électriquement en série avec la deuxième bobine (12) via le deuxième connecteur de bobine (8b) de la deuxième paire de connecteurs de bobine (8a, 8b).

5. L'assemblage d'actionneur linéaire (1b) selon la revendication 3,
dans lequel le premier composant actif (13a ; 14a ; 16a) comprend une première diode ayant une borne d'anode et une borne de cathode ;
dans lequel la borne d'anode de la première diode se connecte électriquement au premier connecteur d'alimentation (10a) de la paire de connecteurs d'alimentation (10a, 10b) ; et
dans lequel la borne de cathode de la première diode se connecte électriquement au deuxième connecteur de bobine (7b) de la première paire de connecteurs de bobine (7a, 7b).

6. L'assemblage d'actionneur linéaire (1b) selon la revendication 4,
dans lequel le deuxième composant actif (13b ; 14b ; 16b) comprend une deuxième diode ayant une borne d'anode et une borne de cathode ;
dans lequel la borne de cathode de la deuxième diode se connecte électriquement au premier connecteur d'alimentation (10a) de la paire de connecteurs d'alimentation (10a, 10b) ; et
dans lequel la borne d'anode de la deuxième diode se connecte électriquement au deuxième connecteur de bobine (8b) de la deuxième paire de connecteurs de bobine (8a, 8b).

7. L'assemblage d'actionneur linéaire (1b) selon l'une quelconque des revendications 3 ou 5,
dans lequel l'assemblage d'actionneur linéaire (1b) comprend un contrôleur (15) ayant une première broche de sortie ;
dans lequel le premier composant actif (13a ; 14a ; 16a) comprend un premier redresseur commandé ayant une borne de grille et une borne d'anode et une borne de cathode ;
dans lequel la borne d'anode du premier redresseur commandé se connecte électriquement au premier connecteur d'alimentation (10a) de la paire de connecteurs d'alimentation (10a, 10b) ;
dans lequel la borne de cathode du premier redresseur commandé se connecte électriquement au deuxième connecteur de bobine (7b) de la première paire de connecteurs de bobine (7a, 7b) ; et
dans lequel la borne de grille du premier redresseur commandé se connecte électriquement à la première broche de sortie du contrôleur (15) de sorte que le contrôleur (15) commande les opérations de commutation du premier redresseur commandé.

8. L'assemblage d'actionneur linéaire (1b) selon la revendication 7, dans lequel le premier redresseur commandé comprend un premier thyristor.

9. L'assemblage d'actionneur linéaire (1b) selon l'une quelconque des revendications 4 ou 6,
dans lequel l'assemblage d'actionneur linéaire (1b) comprend un contrôleur (15) ayant une deuxième broche de sortie ;
dans lequel le deuxième composant actif (13b ; 14b ; 16b) comprend un deuxième redresseur commandé ayant une borne de grille et une borne d'anode et une borne de cathode ;
dans lequel la borne de cathode du deuxième redresseur commandé se connecte électriquement au premier connecteur d'alimentation (10a) de la paire de connecteurs d'alimentation (10a, 10b) ;
dans lequel la borne d'anode du deuxième redresseur commandé se connecte électriquement au deuxième connecteur de bobine (8b) de la deuxième paire de connecteurs de bobine (8a, 8b) ; et
dans lequel la borne de grille du deuxième redresseur commandé se connecte électriquement à la deuxième broche de sortie du contrôleur (15) de sorte que le contrôleur (15) commande les opérations de commutation du deuxième redresseur commandé.

10. L'assemblage d'actionneur linéaire (1b) selon la revendication 9, dans lequel le deuxième redresseur commandé comprend un deuxième thyristor.

11. L'assemblage d'actionneur linéaire (1b) selon l'une quelconque des revendications 5 à 10, l'assemblage d'actionneur linéaire (1b) comprenant :
une source d'alimentation (9) connectée électriquement à la source de courant (6) via la paire de connecteurs d'alimentation (10a, 10b) ; et
dans lequel la source d'alimentation (9) est configurée pour appliquer un courant électrique alternatif à la paire de connecteurs d'alimentation (10a, 10b).

12. L'assemblage d'actionneur linéaire (1b) selon la revendication 3,
dans lequel l'assemblage d'actionneur linéaire (1b) comprend un contrôleur (15) ayant une troisième broche de sortie ;
dans lequel le premier composant actif (13a ; 14a ; 16a) comprend un premier commutateur ayant une borne de grille et une borne de collecteur et une borne d'émetteur ;
dans lequel la borne de collecteur du premier commutateur se connecte électriquement au premier connecteur d'alimentation (10a) de la paire de connecteurs d'alimentation (10a, 10b) ;
dans lequel la borne d'émetteur du premier commutateur se connecte électriquement au deuxième connecteur de bobine (7b) de la première paire de connecteurs de bobine (7a, 7b) ; et
dans lequel la borne de grille du premier commutateur se connecte électriquement à la troisième broche de sortie du contrôleur (15) de sorte que le contrôleur (15) commande les opérations de commutation du premier commutateur.

13. L'assemblage d'actionneur linéaire (1b) selon la revendication 12, dans lequel le premier commutateur comprend un premier transistor bipolaire à grille isolée.

14. L'assemblage d'actionneur linéaire (1b) selon l'une quelconque des revendications 12 à 13, l'assemblage d'actionneur linéaire (1b) comprenant :
une source d'alimentation (9) connectée électriquement à la source de courant (6) via la paire de connecteurs d'alimentation (10a, 10b) ; et
dans lequel la source d'alimentation (9) est configurée pour appliquer un courant électrique continu à la paire de connecteurs d'alimentation (10a, 10b).
